**Europäisches Patentamt**

**European Patent Office**

**Office européen des brevets**

(19)

(11) Veröffentlichungsnummer : **0 014 415**
**B1**

(12) **EUROPÄISCHE PATENTSCHRIFT**

(45) Veröffentlichungstag der Patentschrift :
16.02.83

(21) Anmeldenummer : 80100433.4

(22) Anmeldetag : 28.01.80

(51) Int. Cl.³ : **H 02 P 13/20, H 02 M 7/48, H 02 J 3/38**

(54) **Verfahren zur Regelung von Wechselrichtern im Parallelbetrieb und Schaltungsanordnungen zur Durchführung des Verfahrens.**

(30) Priorität : 08.02.79 DE 2904786

(43) Veröffentlichungstag der Anmeldung :
20.08.80 Patentblatt 80/17

(45) Bekanntmachung des Hinweises auf die Patenterteilung : 16.02.83 Patentblatt 83/07

(84) Benannte Vertragsstaaten :
AT BE CH DE FR GB IT SE

(56) Entgegenhaltungen :
DE A 1 463 336
DE A 2 231 152
DE A 2 319 319
DE A 2 421 126
US A 3 621 365

(73) Patentinhaber : **SIEMENS AKTIENGESELLSCHAFT**
**Berlin und München Wittelsbacherplatz 2**
**D-8000 München 2 (DE)**

(72) Erfinder : **Kublick, Christian, Dipl.-Ing.**
**Eskilstunastrasse 19**
**D-8520 Erlangen (DE)**

EP 0 014 415 B1

**0 014 415**

## Verfahren zur Regelung von Wechselrichtern im Parallelbetrieb und Schaltungsanordnungen zur Durchführung des Verfahrens

Die Erfindung betrifft ein Verfahren zur Regelung von Spannung und Lastaufteilung sowie zur Synchronisierung mehrerer Wechselrichter, deren Ausgänge mit einer gemeinsamen Sammelschiene verbindbar sind und Schaltungsanordnungen zur Durchführung des Verfahrens.

Ein solches Verfahren ist beispielsweise aus dem Aufsatz « Unterbrechungsfreie Stromversorgung mit Wechselrichtern » aus Siemens Zeitschrift 47 (1973), Heft 2, Seiten 123 bis 126 bekannt. In dieser Literaturstelle sind bei Parallelschaltung von Wechselrichtern auftretende Probleme anhand von unterbrechungsfreien Stromversorgungen abgehandelt, analoge Probleme treten jedoch auch bei anderen Anwendungsfällen parallelgeschalteter Wechselrichter auf, z. B. bei Notstromversorgungen oder Umformern.

Das öffentliche Netz ist für die Versorgung empfindlicher Verbraucher nicht immer geeignet, da seine Verfügbarkeit in engen Toleranzen, vor allem hinsichtlich der Höhe der Spannung nicht gewährleistet ist. So kann der Betrieb von Datenverarbeitungsanlagen z. B. schon durch Kurzunterbrechungen für die Dauer einiger 100 msec gestört werden. Um diese Schwierigkeiten zu umgehen, versorgt man empfindliche Verbraucher unterbrechungsfrei über Umrichter in Verbindung mit einer netzunabhängigen Energiequelle. Diese ist im allgemeinen eine Batterie, die von einem gesteuerten Gleichrichter aus dem öffentlichen Netz geladen wird. Ein Wechselrichter versorgt dann den empfindlichen Wechselstromverbraucher. Zur Erhöhung der Zuverlässigkeit werden oft mehrere Wechselrichter über eine Sammelschiene parallelgeschaltet, so daß sich ein redundanter Aufbau ergibt. Dabei muß für Frequenz- und Spannungskonstanz der Sammelschienen-Spannung gesorgt werden, die Wechselrichter müssen untereinander synchronisiert werden und die Last muß möglichst gleichmäßig auf alle parallelbetriebenen Anlagen verteilt werden. Diese Bedingungen müssen für eine Reihe von Betriebszuständen erfüllt sein, also nicht nur im Normalbetrieb mit Parallelschaltung aller Wechselrichter, sondern z. B. auch bei Ausfall einzelner Wechselrichter und bei Betrieb mit Netzrückschaltung.

Die geschilderten Probleme treten in ähnlicher Weise z. B. auch bei parallelgeschalteten statischen Umformern und bei Notstromversorgungen mit mehreren parallelgeschalteten Wechselrichtern auf.

Aus dem obengenannten Aufsatz « Unterbrechungsfreie Stromversorgung mit Wechselrichtern » aus Siemens Zeitschrift 47 (1973), Heft 2, Seiten 123 bis 126, ist eine Regeleinrichtung für parallelgeschaltete Wechselrichter bekannt, bei der jeder Wechselrichter eine Synchronisiereinrichtung besitzt, die die Phasenlage des ihr zugeordneten Wechselrichters erfaßt und mit der Phasenlage der übrigen Wechselrichter vergleicht. Dazu ist eine gesonderte Synchronisierleitung zwischen den Wechselrichtern erforderlich. Zur definierten Lastaufteilung zwischen den Wechselrichtern ist eine Regelung vorhanden, die aus den Betriebsdaten der parallel arbeitenden Wechselrichter über den Betragsstelleingang für die Spannung des Wechselrichters für eine entsprechende Lastübernahme sorgt. Weiterhin muß eine Spannungssteuerung für den Wechselrichter vorgesehen sein. Zur Anpassung des Wechselrichters an unterschiedliche Betriebszustände müssen umfangreiche Eingriffe in die Regelvorrichtung vorgenommen werden, die beim Umschalten zwischen den Betriebszuständen zu Regelungsschwankungen führen können.

Aus der Veröffentlichung 536 « Redundante Synchronisation von statischen Stromversorgungsanlagen » vom Juli 1975 der AG für industrielle Elektronik, Losone-Locarno, Seite 3 bis 7, ist es bekannt, die Sammelschiene parallelgeschalteter Wechselrichter als Synchronisierleitung zu verwenden. Die Verwendung der Sammelschiene zur Synchronisierung ist jedoch als nachteilig bezeichnet und nicht näher ausgeführt.

Aufgabe der Erfindung ist es, ein Verfahren und eine Schaltungsanordnung zur Regelung parallelschaltbarer Wechselrichter anzugeben, bei dem zur Regelung von Spannung und Lastaufteilung sowie zur Synchronisierung nur eine Regelgröße für jeden Wechselrichter erforderlich ist und bei der zur Anpassung an verschiedene Betriebszustände nur eine Umschaltung des Sollwertes erforderlich ist.

Diese Aufgabe wird erfindungsgemäß dadurch gelöst, daß für jeden Wechselrichter eine Ersatzregelgröße $U_{Wi'} = U_{Wi} + \Delta I_i \cdot Z_{xi}$ gebildet wird und zur Regelung jedes Wechselrichters die Ersatzregelgröße $U_{Wi}$ mit einer für alle Wechselrichter gleichen Sollspannung in Betrag und Phase verglichen wird, wobei $U_{Wi}$ die Ausgangsspannung des Wechselrichters, $\Delta I_i$ die Abweichung des Ausgangsstroms $I_{Wi}$ des Wechselrichters von einem vorgegebenen Sollstrom ($I_{soll\ i}$) und $Z_{xi}$ eine komplexe Impedanz ist.

Mit den so gewählten Ersatzregelgrößen ist es möglich, die vorgegebene Lastaufteilung zwischen den Wechselrichtern zu erzielen, die Ausgangsspannung der Wechselrichter auf einem Sollwert zu halten und die Wechselrichter untereinander zu synchronisieren. Die Ersatzregelgröße ist bei allen in der Praxis vorkommenden Betriebszuständen anwendbar, so daß bei Umschaltung zwischen den Betriebszuständen lediglich die Sollspannung geändert werden muß. Die Ersatzregelgröße ist mit einfachen schaltungstechnischen Mitteln zu bilden.

Zweckmäßigerweise werden für jeden Wechselrichter Wirk- und Blindanteil der komplexen Impedanz so gewählt, daß sie proportional dem Wirk- und Blindanteil des Innenwiderstandes des Wechselrichters sind. Damit wird ein optimales Regelverhalten erreicht.

Bei einem Verfahren zur Regelung mehrerer Wechselrichter mit getrennten Phasen- und Betragsregelkanälen, wobei die Sollspannung in eine Betrags- und eine Phasen-Sollspannung aufgespalten ist,

2

kann für jeden Wechselrichter Phasenlage und Betrag der Ersatzregelgröße in je einem gesonderten Phasenregelkanal mit der Phasenlage der Phasen-Sollspannung bzw. Betragsregelkanal mit dem Betrag der Betrags-Sollspannung verglichen werden. Durch diese Aufspaltung der Regelung in zwei Kanäle ergibt sich eine Vereinfachung. Außerdem weisen die meisten Steuersätze von Wechselrichtern getrennte Eingänge zur Phasen- und Betragssteuerung auf, so daß ohnehin getrennte Signale vorhanden sein müssen.

Jeder Wechselrichter kann einen Steuersatz mit einem freischwingenden Taktgeber enthalten, dessen Frequenz und Phasenlage durch den Phasenregelkanal nur innerhalb bestimmter Grenzen beeinflußbar ist. Dadurch kann jeder Wechselrichter auch ohne Phasensteuerung in Eigentaktung betrieben werden, was z. B. dann notwendig ist, wenn ein Wechselrichter die Frequenzführung übernehmen soll.

Ein führender Wechselrichter kann die Frequenz der Sammelschienenspannung bestimmen, wobei bei diesem führenden Wechselrichter die Phasen-Sollspannung eine Spannung mit konstanter Frequenz und bei den übrigen Wechselrichtern die Phasen-Sollspannung die Sammelschienenspannung ist. Durch diese einfache Maßnahme kann jeder beliebige Wechselrichter die Frequenzführung der Sammelschienenspannung übernehmen, so daß die parallelgeschalteten Wechselrichter nicht von einer Referenzquelle abhängig sind.

Bei einem führenden Wechselrichter, der die Frequenz der Sammelschienenspannung bestimmt, kann die Frequenz- und Phasenlage des Taktgebers im Steuersatz unbeeinflußt bleiben, wobei bei den anderen Wechselrichtern die Phasen-Sollspannung die Sammelschienenspannung ist. Dadurch können Wechselrichter, die getrennte Phasen- und Betragsregelkanäle aufweisen und die einen freischwingenden Taktgeber enthalten, besonders einfach als frequenzführende Wechselrichter verwendet werden.

Ein führender Wechselrichter kann den Betrag der Sammelschienenspannung bestimmen, wobei bei diesem führenden Wechselrichter die Betrags-Sollspannung eine Spannung mit konstantem Betrag ist und bei den übrigen Wechselrichtern die Betrags-Sollspannung die Sammelschienenspannung ist. Dadurch kann jeder beliebige Wechselrichter die Betragsführung der Sammelschienenspannung übernehmen und die anderen Wechselrichter werden im Betrag der Ausgangsspannung nach diesem führenden Wechselrichter geregelt.

Vorteilhafterweise ist jedem Wechselrichter eine Rangstufe zugeordnet, wobei von den mit der Sammelschiene verbundenen und funktionsfähigen Wechselrichtern der Wechselrichter mit der höchsten Rangstufe der führende Wechselrichter ist. Damit wird festgelegt, welcher Wechselrichter bei Ausfall des zunächst führenden Wechselrichters als nächster die Führung übernimmt.

Wenn die Sammelschiene mit einem Netz verbindbar ist, kann bei vorhandener Netzspannung für den Phasenregelkanal aller Wechselrichter als Sollwert die Netzspannung verwendet werden. Dadurch werden alle Wechselrichter schon mit dem Netz synchronisiert auch wenn sie noch nicht mit diesem verbunden sind, so daß eine Netzrückschaltung ohne Frequenz- und Phasensprung möglich ist.

Wenn das Netz schließlich mit der Sammelschiene verbunden ist, kann bei jedem Wechselrichter die Sollspannung die Sammelschienenspannung sein. Dabei übernimmt das Netz die Spannungs- und Frequenzführung der Wechselrichter.

Der Sollstrom kann in einer Rechenschaltung nach folgender Gleichung ermittelt werden :

$$I_{\text{soll } i} = \frac{I_{ni}}{\sum_1^p I_{ni}} \cdot I_{S},$$

wobei $I_S$ der Laststrom der Sammelschiene, $I_{ni}$ der Nennstrom des Wechselrichters und p die Anzahl der mit der Sammelschiene verbundenen Wechselrichter ist. Damit ergibt sich eine Aufteilung des Laststroms entsprechend der Nennleistung der Wechselrichter.

Wenn ein Netz mit der Sammelschiene verbunden ist, kann der Sollstrom in einer Rechenschaltung nach folgender Gleichung ermittelt werden :

$$I_{\text{soll } i} = \frac{I_{ni}}{\sum_1^p I_{ni} + I_{ns}} \cdot I_{S}.$$

Dabei ist $I_{ns}$ ein Anteil für den Sollstrom des Netzes, die übrigen Größen sind wie vorstehend definiert. Damit beteiligt sich auch das Netz dem Anteil $I_{ns}$ entsprechend am Laststrom.

Der Betrag der Sollspannung des Wechselrichters kann verringert werden, wenn der Ausgangsstrom dieses Wechselrichters einen Grenzwert überschreitet. Mit Verringerung der Sollspannung sinkt der Ausgangsstrom des betreffenden Wechselrichters, so daß sich auf einfache Weise eine wirkungsvolle

3

Strombegrenzung ergibt.

Die Ausgangsspannung des Betragsregelkanals kann im Wertebereich durch einen oberen und einen unteren Grenzwert begrenzt werden. Dadurch wird die Ausgangsspannung des Wechselrichters nach oben und unten begrenzt. Dabei wird zweckmäßigerweise zum Anfahren eines nicht mit der Sammelschiene verbundenen Wechselrichters der obere Grenzwert von Null beginnend zu einem Nennwert verstellt. Damit steigt die Ausgangsspannung des Wechselrichters entsprechend der Verstellung des oberen Grenzwerts von Null beginnend zu ihrem Nennwert an.

Die Schaltungsanordnung zur Bildung der Ersatzregelgröße wird zweckmäßigerweise so ausgebildet, daß ein Stromdetektor für den Sammelschienenstrom mit dem Eingang einer Multiplikationsschaltung verbunden ist, deren Ausgang mit dem negativen Eingang einer Summierstufe verbunden ist, daß der positive Eingang der Summierstufe mit einem Stromdetektor für den Ausgangsstrom des Wechselrichters verbunden ist und daß dem Ausgang der Summierstufe ein Verstärker mit dem Verstärkungsfaktor $Z_x$ nachgeschaltet ist, dessen Ausgang mit dem ersten positiven Eingang der Summierstufe verbunden ist, wobei der zweite positive Eingang der Summierstufe mit einem Spannungsdetektor für die Wechselrichterausgangsspannung verbunden ist. Diese Schaltungsanordnung stellt eine einfache Möglichkeit zur Erzeugung der Ersatzregelgröße dar. Vorteilhafterweise enthält die Multiplikationsschaltung einen Operationsverstärker, dessen invertierender Eingang über einen Widerstand mit dem Eingang der Rechenschaltung verbunden ist, dessen nicht invertierender Eingang an Masse liegt, dessen Ausgang mit dem Ausgang der Multiplikationsschaltung verbunden ist und der zwischen Ausgang und invertierendem Eingang mehrere Reihenschaltungen aufweist, die jeweils aus einem Rückführwiderstand und einem Halbleiterschalter bestehen und wobei die Basis jedes Halbleiterschalters mit je einem Signaleingang der Multiplikationsschaltung verbunden ist. Damit wird die Rechenschaltung durch einen Operationsverstärker mit steuerbarer Rückführung und damit steuerbarer Verstärkung realisiert.

Der Phasenregelkanal enthält zweckmäßigerweise einen Phasendiskriminator, dessen Eingänge mit dem Ausgang der Rechenschaltung für die Bildung der Ersatzregelgröße bzw. mit dem Spannungsdetektor für die Phasen-Sollspannung jeweils über als übersteuerte Verstärker ausgeführte Rechteckbildner verbunden sind, wobei der Ausgang des Phasendiskriminators über den Phasenregler mit dem Frequenzsteuereingang des Steuersatzes verbunden ist. Diese Schaltungsanordnung stellt eine einfache Möglichkeit zur Realisierung des Phasenregelkanals dar.

Zur Betragsregelung enthält ein Betragsregelkanal zweckmäßigerweise eine Summierstufe, deren positiver Eingang mit einem Spannungsdetektor für den Betrags-Sollwert und deren negativer Eingang mit dem Ausgang einer Rechenschaltung zur Bildung der Ersatzregelgröße verbunden ist, wobei der Summierstufe ein Betragsregler nachgeschaltet ist, der über eine Begrenzungseinrichtung mit dem Betragsstelleingang des Steuersatzes verbunden ist, wobei die Begrenzungseinrichtung einen mit einem festen Spannungswert beaufschlagten ersten Begrenzungseingang zur Minimalwertbegrenzung und einen mit einem als Funktionsgeber ausgebildeten Hochlaufgeber verbundenen zweiten Begrenzungseingang zur Maximalwertbegrenzung aufweist und wobei der Hochlaufgeber durch ein Steuersignal auf einen Steuereingang auf Null setzbar ist. Diese Schaltungsanordnung stellt eine einfache Möglichkeit zur Realisierung des Betragsregelkanals dar.

Die Regeleinrichtung kann zur Strombegrenzung vorteilhafterweise einen Strombegrenzungskanal mit einer Summierstufe enthalten, wobei der negative Eingang der Summierstufe über einen Gleichrichter und ein Glättungsfilter mit einem Stromdetektor für den Wechselrichterausgangsstrom und der positive Eingang der Summierstufe mit einer Referenzspannungsquelle verbunden ist und wobei der Ausgang der Summierstufe über einen Strombegrenzungsregler und eine Diode mit dem negativen Eingang einer Summierstufe verbunden ist, an deren positivem Eingang die Sollspannung anliegt. Mit dieser Schaltung wird eine Strombegrenzung des Wechselrichters erreicht.

Das erfindungsgemäße Verfahren zur Regelung mehrerer Wechselrichter sowie eine Schaltungsanordnung zur Durchführung des Verfahrens werden im folgenden beispielhaft anhand der Figuren 1 bis 5 näher beschrieben.

Dabei zeigen

Figur 1   Blockschaltbild einer unterbrechungsfreien Stromversorgungsanlage.

Figur 2   Ersatzschaltbild der unterbrechungsfreien Stromversorgungsanlage.

Figur 3   Zeigerbilder der Ersatzregelgröße.

Figur 4   Blockschaltbild der Regelungsschaltung.

Figur 5   Aufbau der Multiplikationsschaltung.

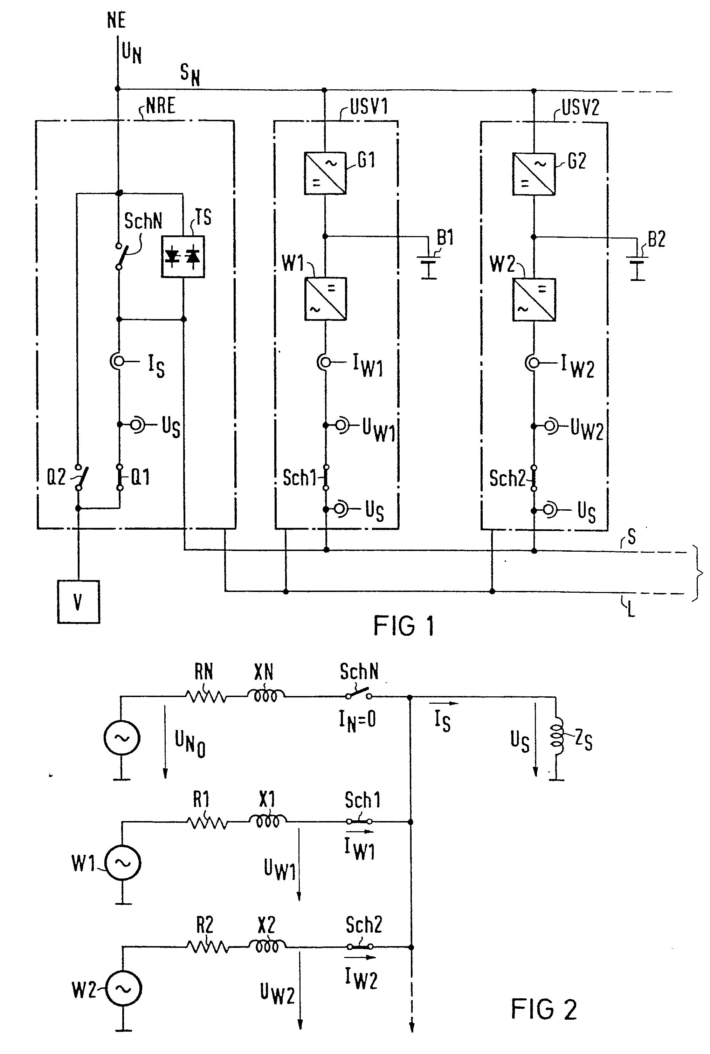

Zur Demonstration des erfindungsgemäßen Verfahrens zeigt Fig. 1 vereinfacht die Blockschaltung einer redundant aufgebauten unterbrechungsfreien Stromversorgungsanlage mit zwei Umrichtereinheiten USV1, USV2 sowie einer Netzrückschalteinrichtung NRE. Aus der Netzeinspeisung NE werden über die Netzschiene $S_N$ mehrere Umrichtereinheiten versorgt, von denen im Beispiel nach Fig. 1 zwei, nämlich USV1 und USV2 dargestellt sind. Jede Umrichtereinheit besteht aus einem Gleichrichterteil G und einem Wechselrichterteil W. Zwischen Gleichrichter G und Wechselrichter W ist eine Batterie B geschaltet, die über den Gleichrichter G aufgeladen wird und bei Netzausfall den Wechselrichter W mit Energie versorgt. Alle Umrichter USV sind über je einen Schalter Sch mit einer Sammelschiene S verbunden. Mit dem Schalter Sch kann jeder Wechselrichter W zu- bzw. abgeschaltet werden. In jedem Umrichter USV werden der Ausgangsstrom $I_W$ des Wechselrichters W, die Ausgangsspannung $U_W$ des

4

Wechselrichters W und die Sammelschienenspannung $U_S$ gemessen.

Der Verbraucher V kann wahlweise über den Schalter Q2 direkt aus dem Netz oder über den Schalter Q1 von der Sammelschiene S versorgt werden. Um eine Versorgung des Verbrauchers V auch bei Ausfall von Umrichtern USV aufrechtzuerhalten, kann die Sammelschiene S bei ausreichender Netzspannung $U_N$ über den Schalter SchN oder den schnellen Thyristorschalter TS mit dem Netz verbunden werden. Eine Verbindung zwischen Sammelschiene S und Netz NE ist auch zum Anfahren der Anlage oder zur Übernahme von Belastungen möglich, die die Umrichter allein nicht aufbringen könnten. In den Netzrückschalteinrichtungen NRE werden der Sammelschienenstrom $I_S$ und die Sammelschienenspannung $U_S$ gemessen. Zwischen der Netzrückschalteinrichtung NRE und den Umrichtern USV werden über die redundant und fehlergeschützt ausgelegte Leitung L Zustandssignale ausgetauscht.

Um den Parallelbetrieb der Wechselrichter $W_i$ und die Rückschaltung auf das Netz durchführen zu können, müssen die Wechselrichter $W_i$ so geregelt werden, daß Betrag und Phase der Ausgangsspannungen übereinstimmen und auch mit dem Netz in Einklang gebracht werden können. Wenn Redundanz gefordert ist, kann zur Regelung der einzelnen Wechselrichter kein gemeinsamer Regelkreis verwendet werden, da diese sonst von einem gemeinsamen Glied abhängig wären und somit die geforderte Redundanz durchbrochen wäre. Nachteilig ist es außerdem, wenn unter den Wechselrichtern Analogsignale ausgetauscht werden müssen, die wegen ihres zwangsläufig geringen Signalpegels störanfällig sind. Weniger kritisch ist der Austausch von Zustandsmeldungen, die nur gelegentlich ihren Signalpegel ändern und die sehr störsicher übertragen werden können.

Die hier anhand einer unterbrechungsfreien Stromversorgungsanlage geschilderten Probleme treten auch bei anderen Anlagen mit parallelgeschalteten Wechselrichtern auf, beispielsweise bei statischen Umformern, die im Unterschied zur unterbrechungsfreien Stromversorgungsanlage keine Batterie im Zwischenkreis haben oder bei Notstromversorgungen, bei denen die Speisung der Last im Normalfall über ein Netz und nur im Störungsfall über Wechselrichter erfolgt.

Das hier gewählte Regelverfahren beruht darauf, daß zwischen den einzelnen Wechselrichtern nur Zustandsmeldungen ausgetauscht werden, während die Synchronisation über die Sammelschiene S oder die Netzschiene $S_N$ erfolgt, die beide als Starkstromglieder sehr robust und störsicher ist. Bei Zerstörungen beider Schienen könnten zwar die Wechselrichter nicht mehr synchronisiert werden, was aber bedeutungslos ist, da bei Zerstörung der Schiene der Verbraucher ohnehin nicht weiter versorgt werden kann. Wenn alle drei Phasen zur Synchronisierung benutzt werden, kann auch bei Ausfall einer Phase die Synchronisierung aufrechterhalten werden.

Zur Ableitung des Regelverfahrens ist in Fig. 2 das Ersatzschaltbild der unterbrechungsfreien Stromversorgungsanlage nach Fig. 1 dargestellt, das für die Grundschwingungen von Spannungen und Strömen gilt. Es wurde vorausgesetzt, daß die Innenwiderstände von Netz und Wechselrichtern ohmischinduktiv und linear sind. Im Ersatzschaltbild nach Fig. 2 wurde weiter davon ausgegangen, daß der Schalter $Sch_N$ der Netzrückschalteinrichtung NRE nicht eingeschaltet und die Schalter Sch1 und Sch2 beider Wechselrichter W1 und W2 eingeschaltet sind. Das Regelverfahren wird im folgenden für den allgemeinen Fall abgeleitet, daß p Wechselrichter parallelgeschaltet sind. Dabei wurde der Index « i » zur Kennzeichnung jedes Wechselrichters sowie der zugeordneten Meßgrößen eingeführt.

In diesem Fall gilt für alle Wechselrichter

$$U_S = U_{W1} = \ldots = U_{Wi} = \ldots = U_{Wp} \qquad (1)$$

und ferner

$$I_S = \sum_{i=1}^{p} I_{Wi} \qquad (2)$$

Bei unterbrechungsfreien Stromversorgungsanlagen wird im allgemeinen gefordert, daß sich jeder der parallelarbeitenden Wechselrichter $W_i$ seiner Nennleistung und damit seinem Nennstrom $I_{ni}$ entsprechend an der Stromlieferung beteiligt. Um diese Forderung zu erfüllen, muß folgende Bedingung erfüllt sein :

$$I_{Wi} = I_{soll\ i} = \frac{I_{ni}}{\sum_{1}^{p} I_{ni}} \cdot I_S \qquad (3)$$

Dabei ist $I_{ni}$ der Nennstrom des betrachteten Wechselrichters und $\sum_{1}^{p} I_{ni}$ die Summe der Nennströme aller Wechselrichter. Als Abkürzung wird eingeführt :

$$\gamma_i = \frac{I_{ni}}{\sum_{i=1}^{p} I_{ni}} \qquad (4)$$

5

**0 014 415**

Wenn ein Wechselrichter von seinem Sollstrom $I_{soll\ i}$ abweicht, gilt statt Gleichung 3 :

$$I_{Wi} = I_{soll\ i} + \Delta I_i = \gamma_i I_S + \Delta I_i \tag{5}$$

Es wurde nun eine Regelgröße gefunden, mit deren Hilfe die Wechselrichter $W_i$ untereinander synchronisiert werden können und mit der eine definierte Lastaufteilung bei parallel auf eine Sammelschiene S arbeitenden Wechselrichtern $W_i$ sichergestellt werden kann. Diese Regelgröße ist für alle bei Wechselrichtern $W_i$ auftretenden Betriebszustände geeignet, wobei zur Umschaltung der Betriebszustände lediglich Sollwerte geändert werden, nicht aber in den Regler selbst eingegriffen wird. Die Ausgangsspannung $U_{Wi}$ des Wechselrichters $W_i$ kann nicht als Regelgröße verwendet werden, da sie gleich der Sammelschienenspannung $U_S$ ist und somit bei parallelgeschalteten Wechselrichtern keine ausreichende Information enthält. Zur Regelung jedes Wechselrichters $W_i$ wird daher eine komplexe Ersatzregelgröße $U_{Wi}$, gewählt, die sich wie folgt zusammensetzt :

$$U_{Wi}' = U_{Wi} + \Delta I_i \cdot Z_{xi} \tag{6}$$

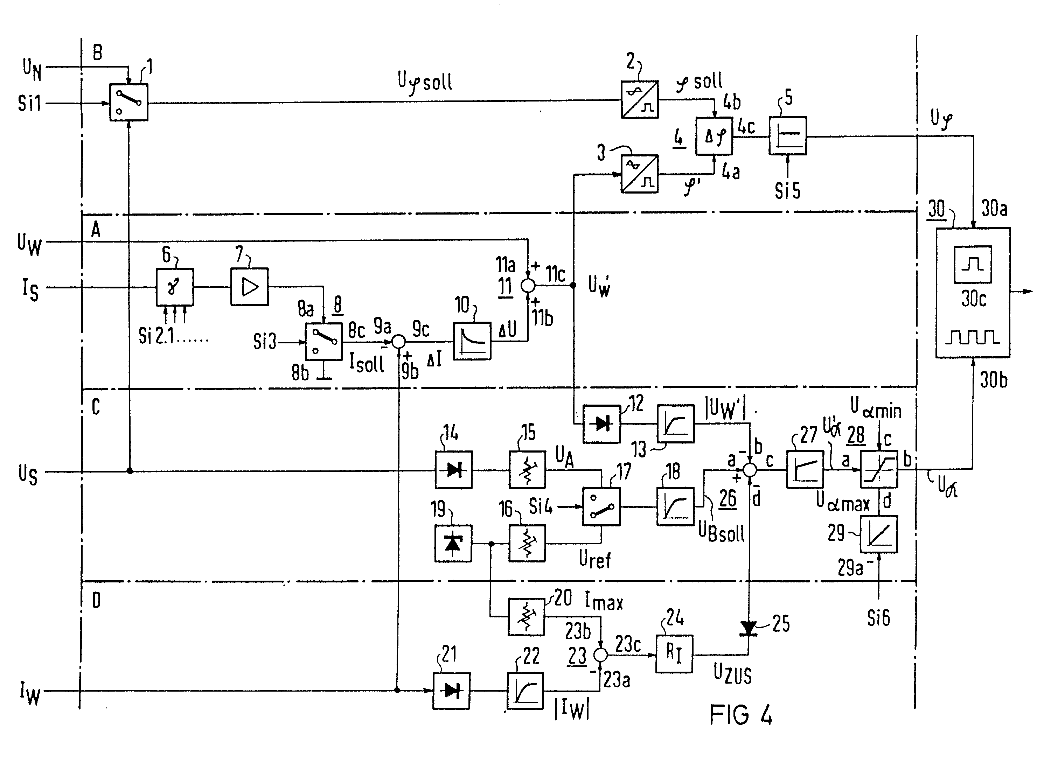

Dabei kann $Z_{xi}$ im Prinzip jede beliebige Impedanz sein. Wie später gezeigt wird, ergibt sich jedoch die maximale Regelgeschwindigkeit, wenn $Z_{xi}$ in Wirk- und Blindanteil dem Innenwiderstand $Z_i$ des betreffenden Wechselrichters proportional ist. Im folgenden wird zunächst nachgewiesen, daß mit der Ersatzregelgröße $U_{Wi}'$ eine definierte Lastaufteilung unter den Wechselrichtern $W_i$ erzielt wird und eine Synchronisierung der Wechselrichter $W_i$ über die Sammelschiene S möglich ist. Schließlich wird anhand der Blockschaltung einer Regelung nach Fig. 4 gezeigt, daß mit der angegebenen Ersatzregelgröße $U_{Wi}$ durch Umschalten von Sollwerten die Anpassung an verschiedene Betriebszustände möglich ist.

Es wird zunächst davon ausgegangen, daß alle betrachteten Wechselrichter $W_i$ mit der Sammelschiene S verbunden sind, wobei keine Verbindung zwischen Sammelschiene und Netz besteht. Weiterhin wird angenommen, daß alle Wechselrichter den gleichen Sollwert $U_{soll}$ haben, auf den die Ersatzregelgröße $U_{Wi}'$ jedes Wechselrichters geregelt wird. Im ausgeregelten Zustand gilt dann :

$$U_{Wi}' = U_{soll} \tag{7}$$

Durch Einsetzen der Gleichung 1 und 7 in Gleichung 6 ergibt sich :

$$\Delta I_i = \frac{U_{soll} - U_S}{Z_{xi}} \tag{8}$$

Bei Summierung über alle P Wechselrichter erhält man :

$$\sum_{i=1}^{P} \Delta I_i = (U_{soll} - U_S) \cdot Y_x \tag{9}$$

wobei

$$Y_x = \sum_{i=1}^{P} \left(\frac{1}{Z_{xi}}\right) \tag{10}$$

Aus den Gleichungen 2, 3, 4 und 5 erhält man durch Summieren über alle p Wechselrichter :

$$\sum_{1}^{P} \Delta I_i = \sum_{1}^{P} I_{Wi} - I_S \cdot \sum_{1}^{P} \gamma_i = 0 \tag{11}$$

Das $Y_x \neq 0$ ist, können Gleichungen 9 und 11 gleichzeitig nur richtig sein, wenn gilt :

$$U_{soll} - U_S = 0 \tag{12}$$

Im ausgeregelten Zustand stimmt also die Sammelschienenspannung $U_S$ mit der gemeinsamen Sollspannung $U_{soll}$ der Wechselrichter $W_i$ überein. Aus Gleichungen 8 und 12 ergibt sich dann auch :

$$\Delta I_i = 0 \tag{13}$$

Nach der Definition von $\Delta I_i$ bedeutet das, daß die gewünschte Lastaufteilung der Wechselrichter erreicht ist. Gleichzeitig wird die Spannung der Sammelschiene auf eine vorgegebenen Wert geregelt.

Im folgenden wird nun davon ausgegangen, daß zusätzlich zu den Wechselrichtern $W_i$ auch das Netz NE mit der Sammelschiene S parallelgeschaltet ist. Dann gilt statt Gleichung 2 :

6

$$I_S = \sum_{i=1}^{p} I_{Wi} + I_N \qquad (14)$$

und

$$U_{No} = U_S + I_N \cdot Z_N \qquad (15)$$

$$I_N = \frac{U_{No} - U_S}{Z_N} \qquad (16)$$

Dabei ist $Z_N$ der Innenwiderstand und $U_{No}$ die Leerlaufspannung des Netzes. Die Gleichungen 7 bis 9 bleiben auch bei Parallelschaltung des Netzes gültig, anstelle von Gleichung 11 gilt jedoch :

$$\sum_{1}^{p} \Delta I_i = - I_N \qquad (17)$$

Wenn man die Gleichungen 9 und 17 gleichsetzt, erhält man mit Gleichung 16 :

$$U_S = \frac{U_{No} + U_{soll} \cdot Z_N \cdot Y_x}{1 + Z_N \cdot Y_x} \qquad (18)$$

Zur Abkürzung wird die relative Abweichung $\beta$ der Netzspannung $U_{No}$ vom Sollwert $U_{soll}$ eingeführt : eingeführt :

$$U_{No} = (1+\beta) \cdot U_{soll} \qquad (19)$$

Damit wird aus Gleichung 18 :

$$U_S = \frac{1+\beta+Z_N \cdot Y_x}{1+Z_N \cdot Y_x} \cdot U_{soll} \qquad (20)$$

und aus Gleichung 8 :

$$\Delta I_i = - \frac{\beta}{1 + Z_N \cdot Y_x} \cdot I_{Ki} \qquad (21)$$

Dabei ist $I_{Ki}$ der Kurzschlußstrom des betrachteten Wechselrichters :

$$I_{Ki} = \frac{U_{soll}}{Z_i} \qquad (22)$$

Im allgemeinen ist der Innenwiderstand $Z_N$ des Netzes gegenüber dem Innenwiderstand $Z_i$ der Wechselrichter zu vernachlässigen, $Z_N$ kann dann als Null angenommen werden. In diesem Fall ergibt sich :

$$U_S (Z_N = 0) = (1+\beta) \cdot U_{soll} = U_{No} \qquad (23)$$

$$\Delta I_i (Z_N = 0) = - \beta \cdot I_{Ki} \qquad (24)$$

7

Für den Sonderfall, daß die Netzspannung $U_N$ mit dem Sollwert $U_{soll}$ übereinstimmt, d. h. also für $\beta = 0$, ergibt sich :

$$U_S \; (\beta = 0) = U_{soll} \tag{25}$$

$$\triangle I_i \; (\beta = 0) = 0 \tag{26}$$

Damit ist gezeigt, daß mit der angegebenen Ersatzregelgröße $U_{Wi}'$ auch bei Parallelbetrieb der Sammelschiene S mit dem Netz NE eine stabile und definierte Lastaufteilung gewährleistet ist. Im allgemeinen ist die Netzimpedanz gegenüber dem Innenwiderstand der Wechselrichter $W_i$ so klein, daß die Netzspannung praktisch die Spannung $U_S$ der Sammelschiene S bestimmt. Die Rückwirkung des Netzes auf die Sammelschiene S ist umso kleiner, je kleiner die relative Abweichung der Netzspannung vom gemeinsamen Sollwert $U_{soll}$ der Wechselrichter ist. Dabei ist natürlich zu beachten, daß der Wechselrichterstrom $I_{Wi}$, der sich aus dem Laststrom und dem zusätzlichen Ausgleichsstrom gegen das Netz zusammensetzt, den maximal zulässigen Strom nicht überschreitet.

Die Stromaufteilung der Wechselrichter $W_i$ kann durch die Wahl des entsprechenden Gewichtsfaktors $\gamma_i$, der in den Sollstrom $I_{soll \, i}$ eingeht, festgelegt werden. Wenn sich z. B. ein Wechselrichter $W_1$ nicht an der Speisung der Sammelschiene S beteiligen soll, so wird für diesen Wechselrichter $W_1$ der Gewichtsfaktor $\gamma_1 = 0$ gewählt. Die Gewichtsfaktoren der anderen Wechselrichter werden nach Gleichung 4 wie folgt gewählt :

$$\gamma_i = \frac{I_{ni}}{\sum\limits_{i=2}^{p} I_{Ni}} \qquad (2 \leq i \leq p) \tag{27}$$

Für den Wechselrichter W1 ergibt sich aus Gleichung 5 :

$$I_{W1} = \triangle I_1 \tag{28}$$

Wenn das Netz nicht mit der Sammelschiene verbunden ist, so ergibt sich bei gleichem Spannungssollwert $U_{soll}$ aller Wechselrichter aus den Gleichungen 8, 13 und 28 :

$$I_{W1} = 0 \tag{29}$$

Wie Gleichung 29 zeigt, kann durch die Wahl von $\gamma_i$ erreicht werden, daß sich der Wechselrichter W1 nicht mehr an der Speisung der Sammelschiene beteiligt und dafür die restlichen Wechselrichter $W_i$ entsprechend größere Ströme übernehmen. Wenn man die Sammelschiene S dagegen parallel mit dem Netz NE betreibt, $\gamma_1 = 0$ setzt und die übrigen Gewichtsfaktoren $\gamma_i$ nach Gleichung 27 wählt, so folgt aus Gleichung 21 :

$$I_{W1} = \triangle I_1 = - \frac{\beta}{1 + Z_N \cdot Y_x} \cdot I_{K1} \tag{30}$$

Bei Parallelbetrieb der Sammelschiene S mit dem Netz NE übernimmt also der mit dem Gewichtsfaktor $\gamma_1 = 0$ versehene Wechselrichter $W_1$ keine Last, sondern führt nur den durch die Abweichung der Netzspannung $U_{NO}$ vom Sollwert $U_{soll}$ verursachten Ausgleichsstrom. Die an der Speisung der Sammelschiene S beteiligten Wechselrichter $W_i$ müssen daher einen entsprechend größeren Anteil des Sammelschienenstroms $I_S$ übernehmen. Für den Fall, daß man bei Parallelbetrieb der Sammelschiene mit dem Netz den Sollwert $U_{soll}$ gleich der Sammelschienenspannung $U_S$ wählt, treten keine Ausgleichströme zwischen Wechselrichter $W_i$ und Netz NE auf. Für diesen Fall folgt nämlich aus Gleichung 16 und 18 :

$$U_S = U_{soll} = U_{No} \qquad (31)$$

$$I_N = 0 \qquad (32)$$

Als besonderer Vorteil der Ersatzregelgröße $U_{Wi}{}'$ ergibt sich, wie im folgenden gezeigt wird, daß ein redundanter Parallelbetrieb der Wechselrichter mit Synchronisierung über die Sammelschiene S ohne eigene Synchronisierleitungen erfolgen kann. Das wird erreicht, indem man als Sollspannung $U_{soll}$ zumindest für die Phasenregelung die Sammelschienenspannung $U_S$ wählt, die in Frequenz und Betrag von Netz NE oder von einem führenden Wechselrichter $W_i$ in der später in Zusammenhang mit Fig. 4 erläuterten Weise geführt wird.

Durch die Wahl der Sammelschienenspannung $U_S$ als Sollspannung $U_{soll}$ ergibt sich aus Gleichung 1 :

$$U_{soll} = U_S = U_{Wi} \qquad (33)$$

und mit den Gleichungen 6 und 7 im ausgeregelten Zustand

$$U_{Wi}{}' = U_{Wi} + \Delta I_i \times Z_{xi} = U_{Wi} \qquad (34)$$

Mit dem beschriebenen Regelverfahren werden also bei Wahl der Sammelschienenspannung $U_S$ als Sollspannung $U_{soll}$ die Wechselrichter $W_i$ untereinander über die Sammelschiene S synchronisiert, wobei die Spannungshaltung der Sammelschiene S nicht beeinträchtigt wird und eine definierte Lastaufteilung unter den parallelgeschalteten Wechselrichtern $W_i$ erreicht wird.

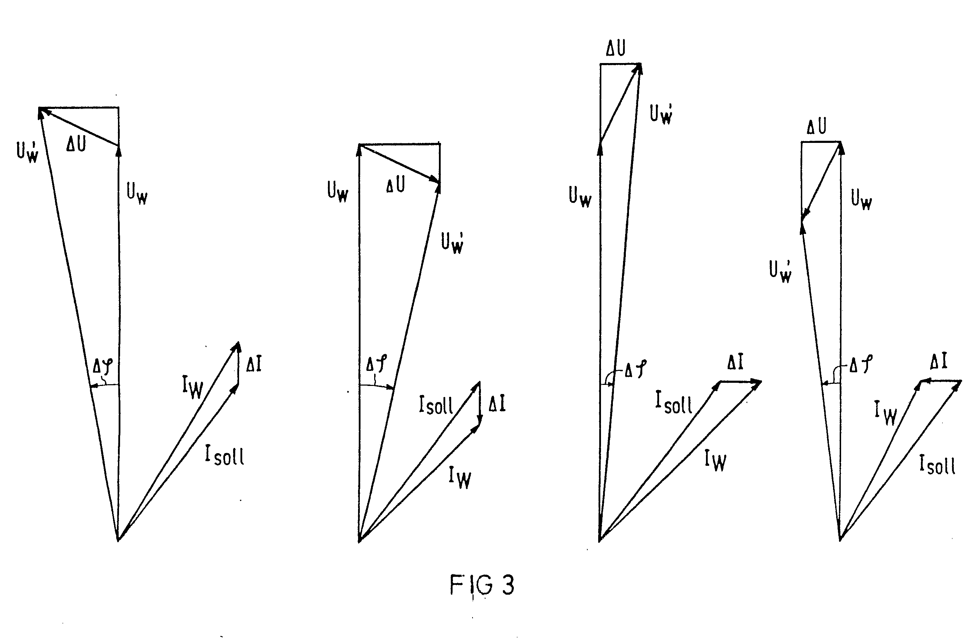

In Fig. 3 sind Zeigerbilder der Ersatzregelgröße $U_{Wi}{}'$ bei verschiedenen Abweichungen des Wechselrichterstroms $I_W$ vom Sollstrom $I_{soll}$ mit der Sammelschienenspannung $U_S$ als Sollspannung $U_{soll}$ dargestellt. Für alle Zeigerbilder ist angenommen, daß die Wechselrichter mit Nennstrom bei cos = 0,8 belastet sind. Der deutlichen Darstellung wegen sind die Spannungsabweichungen $\Delta U$ etwa 10 mal größer als in Wirklichkeit angesetzt. Ferner wird angenommen, daß das Netz NE nicht mit der Sammelschiene S verbunden ist. Damit stimmt also aufgrund der vorausgehenden Betrachtungen im ausgeregelten Zustand die Ersatzregelgröße $U_{Wi}{}'$ nach Gleichung 34 mit der Wechselrichterspannung $U_{Wi}$ überein :

$$U_{Wi}{}' = U_{Wi} \qquad (35)$$

Das Zeigerbild A zeigt einen Betriebsfall mit einer Wirkstromabweichung $\Delta I$ vom Sollwert $I_{soll}$ von 20 %, das Zeigerbild B eine Wirkstromabweichung $\Delta I$ von minus 20 %, das Zeigerbild C eine induktive Blindstromabweichung $\Delta I$ von plus 20 % und das Zeigerbild D eine induktive Blindstromabweichung $\Delta I$ von minus 20 %. Wie die dargestellten Beispiele zeigen, ist zum Ausregeln der angenommenen Stromfehler das Eingreifen von Betrags- und Winkelregelung erforderlich. Dabei zeigt sich, daß sich ein optimales Regelverhalten dann ergibt, wenn Wirk- und Blindanteil von $Z_x$ proportional dem Wirk- und Blindanteil des Innenwiderstandes $Z_i$ des betrachteten Wechselrichters sind. In diesem Fall werden Wirk- und Blindanteil der Stromabweichung im Verhältnis zueinander richtig erfaßt und die Regelung erfolgt auf dem kürzesten Weg, d. h. mit der höchsten Geschwindigkeit. Wenn die komplexe Impedanz $Z_{xi}$ anders gewählt wird, so werden Wirk- und Blindanteil der Stromabweichung $\Delta I$ im Verhältnis zueinander falsch bewertet, so daß ein zu starkes Eingreifen der Regelung in einer Richtung erfolgt. Im Gleichgewichtszustand ergibt sich zwar auch dabei eine Übereinstimmung von $U_{Wi}$ mit $U_{soll}$, diese wurde jedoch nicht auf dem kürzesten Weg erreicht. Zu Unstabilitäten könnte es führen, wenn bei einem Wechselrichter, der einen induktiven Innenwiderstand $Z_i$ aufweist, die Impedanz $Z_{xi}$ mit kapazitivem Anteil oder bei kapazitivem Innenwiderstand $Z_i$ die Impedanz $Z_{xi}$ mit induktivem Anteil gewählt wird. In diesem Falle würde die Phasenregelung zunächst in der falschen Richtung wirken.

In den Zeigerdiagrammen nach Fig. 3 wurde der Fall dargestellt, daß die Sammelschienenspannung $U_S$ sowohl für die Betragsregelung als auch für die Phasenregelung als Sollwert $U_{soll}$ verwendet wird. Bei Wechselrichtern $W_i$ mit gesonderten Betrags- und Phasenregelkanälen kann man auch für den Betragsregelkanal eine interne Konstantspannungsquelle jedes Wechselrichters $W_i$ zur Bildung der Betrags-Sollspannung heranziehen und die Sammelschienenspannung $U_S$ nur zur Bildung einer Phasen-Sollspannung für den Phasenregelkanal verwenden. Die Spannungen der Konstantspannungsquellen der einzelnen Wechselrichter $W_i$ können so genau in Übereinstimmung gebracht werden, daß sich praktisch ein für alle Wechselrichter $W_i$ gleicher Sollwert $U_{soll}$ ergibt. In dem genannten Fall erfolgt also nur die Synchronisierung, nicht aber die Betragsregelung über die Sammelschiene S. Das hat den Vorteil, daß die Sammelschienenspannung $U_S$ konstanter gehalten werden kann. Bei Verwendung der Sammelschienenspannung $U_S$ als Betrags-Sollspannung muß nämlich diese zur Eliminierung von Störungen geglättet werden, was aber eine Verringerung der Regelungsgeschwindigkeit bedeutet. Bei Verwendung von internen Konstantspannungsquellen zur Bildung der Betrags-Sollspannung nicht störend aus.

Nach dieser allgemeinen Ableitung des Regelverfahrens wird im folgenden anhand von Figur 4 die Blockschaltung einer Regelung dargestellt, die nach dem beschriebenen Regelverfahren arbeitet. Dabei wird davon ausgegangen, daß alle Wechselrichter den gleichen Sollwert $U_{soll}$ haben, so daß im ausgeregelten Zustand nach Gleichung 7 die Ersatzregelgröße $U_{Wi}'$ in Betrag und Phasenwinkel mit dem Sollwert $U_{soll}$ übereinstimmt. Die Regelung wird in eine getrennte Betrags- und Phasenregelung aufgespalten, da der Steuersatz eines Wechselrichters in der Regel getrennte Steuereingänge für den Betrag und die Frequenz bzw. Phase hat. Man erhält also zwei Regelkanäle, von denen einer nur den Betrag und der andere nur den Phasenwinkel der Ersatzregelgröße $U_{Wi}'$ verarbeitet. Als Sollwert für den Betragskanal genügt eine Gleichspannung, die entweder von einer Referenzgleichspannung oder von einer gleichgerichteten Wechselspannung abgeleitet wird. Als Sollwert für den Phasenkanal kann eine Wechselspannung beliebiger Kurvenform und Amplitude, als vorteilhaft auch eine Rechteckspannung benutzt werden.

Die Istwertverarbeitung der Regelung ist in der Blockschaltung nach Figur 4 einphasig gezeichnet, kann aber selbstverständlich auch mehrphasig erfolgen. In der Blockschaltung nach Figur 4 ist aus Gründen der einfacheren Schreibweise bei allen Größen der Index « i » weggelassen.

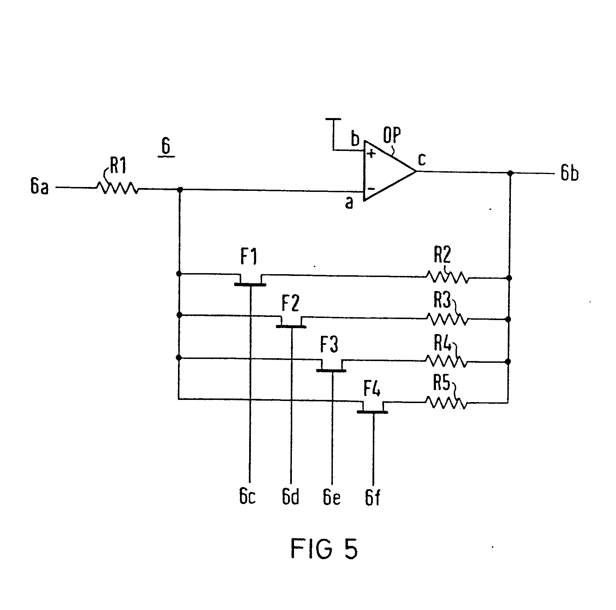

Die Regelschaltung nach Figur 4 läßt sich in vier Funktionsgruppen unterteilen, nämlich die Rechenschaltung A zur Bildung der Ersatzregelgröße $U_{Wi}'$, den Phasenregelkanal B, den Betragsregelkanal C und den Strombegrenzungskanal D. In der Rechenschaltung A wird der Sammelschienenstrom $I_S$ zunächst mit dem Faktor $\gamma$ nach Gleichung 4 in der Multiplikationsschaltung 6 multipliziert. Dazu muß der Multiplikationsschaltung 6 eine Information über die Schaltzustände der weiteren Wechselrichter $W_i$ zugeführt werden. Diese Zustandsinformationen werden unter den Wechselrichtern $W_i$ redundant und fehlergeschützt ausgetauscht. Die Multiplikationsschaltung 6 wird später beispielhaft anhand von Figur 5 dargestellt.

Da für die Bildung von $\Delta I$ die Signale $I_S$ und $I_W$ den gleichen Maßstab haben müssen, folgt auf die Multiplikationsschaltung 6 ein Anpaßglied 7, dessen Verstärkung so gewählt ist, daß $\Delta I$ den genannten Bedingungen genügt. Der Ausgang des Anpassungsgliedes 7 wird mit einem Umschaltkontakt 8a des Umschalters 8 verbunden, dessen zweiter Umschaltkontakt 8b mit Nullpotential verbunden ist. Der Umschalter 8 wird mit dem Signal Si3 gesteuert, dessen Funktion später erläutert wird. Das am Ausgang 8c des Umschalters 8 anstehende Signal $I_{soll\,i}$, das also je nach Pegel des Signals Si3 dem Ausgangssignal des Anpassungsgliedes 7 oder dem Nullsignal entspricht, wird mit dem negativen Eingang 9a der Summierstufe 9 verbunden. Am positiven Eingang der Summierstufe 9 liegt das Stromsignal $I_W$, das den Istwert des Ausgangsstroms des Wechselrichters $W_i$ darstellt. Die am Ausgang 9c der Summierstufe 9 anstehende Differenz $\Delta I$ von Ausgangsstrom $I_{Wi}$ des Wechselrichters $W_i$ und Sollwert $I_{soll\,i}$ des Wechselrichters $W_i$ wird in der Verstärkerschaltung 10 mit der Übertragungsfunktion $Z_x$ multipliziert, die in Wirk- und Blindanteil proportional dem Innenwiderstand $Z_i$ des Wechselrichters $W_i$ ist. Die Verstärkerschaltung 10 ist also eine Widerstandsnachbildung des Wechselrichter-Innenwiderstandes $Z_i$. Am Ausgang der Verstärkerschaltung 10 steht somit die Spannungsabweichung $\Delta U = \Delta I \cdot Z_x$ an, die entsprechend Gleichung 6 in der Additionsschaltung 11 zur Ausgangsspannung $U_W$ des Wechselrichters addiert wird. Am Ausgang 11c der Additionsstufe 11 steht somit die gewünschte Ersatzregelgröße $U_W'$ an. Diese wird nun als Istwert für den Phasenregelkanal B und für den Betragsregelkanal C verwendet.

Die Ersatzregelgröße $U_W'$ wird in dem Rechteckbildner 3 des Phasenregelkanals B in eine Rechteckspannung $\varphi'$ umgewandelt, deren Flanken mit den Nulldurchgängen von $U_W'$ übereinstimmen. Diese Rechteckspannung $\varphi'$ wird auf den Eingang 4a des Winkeldiskriminators 4 gegeben. Dem zweiten Eingang 4b des Winkeldiskriminators 4 wird als Sollwert eine zweite Folge von Rechtecksignalen $\varphi_{soll}$ als Phasen-Sollwert zugeführt. Zur Bildung des Signals $\varphi_{soll}$ kann entweder die Netzspannung $U_N$ oder die Sammelschienenspannung $U_S$ verwendet werden. Dazu ist ein von einem später zu erläuternden Signal Si1 gesteuerter Umschalter 1 vorgesehen. Das Ausgangssignal $U_{\varphi soll}$ des Umschalters 1 wird auf einen Eingang 4b eines zweiten Rechteckbildners 2 gegeben, der aus diesem Signal eine Rechteckspannung $\varphi_{soll}$ bildet, deren Flanken mit den Nulldurchgängen von $U_N$ bzw. $U_S$ übereinstimmen. Dieses Signal stellt den genannten Sollwert $\varphi_{soll}$ dar. Der Phasendiskriminator 4 vergleicht die Phasenlage von $\varphi_{soll}$ und $\varphi'$, wobei der Ausgang 4c des Phasendiskriminators 4 mit dem Eingang des Winkelreglers 5 verbunden ist, der z. B. ein Proportional-Regler sein kann. Am Ausgang des Winkelreglers 5 steht damit die Steuerspannung $U\varphi$ an, die in Vorzeichen und Betrag der vorhandenen Phasenabweichung $\Delta\varphi$ entspricht. Diese wird dem Frequenzstelleingang 30a des Steuersatzes 30 des Wechselrichters W zugeführt. Der Steuersatz 30 enthält einen frequenzstabilisierten Taktgenerator 30c, dessen Frequenz durch den Steuereingang 30a nur innerhalb bestimmter Grenzen veränderbar ist. Bei eigengetaktetem Betrieb des Wechselrichters W kann der Phasenregler 5 am Eingang 5c durch das Steuersignal Si5 gesperrt, d. h. auf Null gesetzt werden. Der Taktgeber 30c des Steuersatzes 30 schwingt dann frei mit der intern vorgegebenen Frequenz.

Im Regelkanal C für die Betragsregelung wird der Betrag der Ersatzregelgröße $U_W'$ mit einem Betragssollwert $U_{Bsoll}$ verglichen. Der Sollwert $U_{Bsoll}$ der Betragsregelung kann über den mit dem Signal Si4 steuerbaren Umschalter 17 wahlweise zwischen den Spannungen $U_A$ und $U_{ref}$ umgeschaltet werden. Die Spannung $U_A$ wird über den Gleichrichter 14 und einen zur Betragsanpassung vorgesehenen Spannungsteiler 15 aus der Sammelschienenspannung $U_S$ erzeugt. Die Spannung $U_{ref}$ wird aus der Konstantspannungsquelle 19 über einen Spannungsteiler 16 gewonnen. Dem Umschalter 17 ist ein Glättungsglied 18 nachgeschaltet, das dazu dient, die Welligkeit der Spannung $U_A$ zu unterdrücken und Sollwertsprünge beim Umschalten zwischen $U_A$ und $U_{ref}$ bzw. umgekehrt zu vermeiden. Nach dem Ausgang der Glättungsstufe 18 steht also ein geglätteter Betragssollert $U_{Bsoll}$ zur Verfügung, der, gesteuert durch das Signal Si4, wahlweise aus einer internen Konstantspannungsquelle 19 oder der Sammelschienenspannung $U_S$ gewonnen wird.

Dieser Betragssollwert $U_{Bsoll}$ wird nun in der Additionsstufe 26 mit dem Betrag $|U_W'|$ der Ersatzregelgröße $U_W'$ verglichen, wobei $U_{Bsoll}$ auf den positiven und $U_W'$ auf den negativen Eingang der Additionsstufe 26 gegeben wird. Der Betrag $|U_W'|$ wird aus der Ersatzregelgröße $U_W'$ durch einen Gleichrichter 12 und ein nachgeschaltetes Glättungsglied 13 abgeleitet. Am Ausgang c der Additionsstufe 26 steht also die Regelabweichung $U_{Bsoll}-|U_W'|$ an. Aus dieser bildet der Betragsregler 27 eine Spannung $U_\alpha'$, die in der nachgeschalteten Begrenzungsstufe in dem Bereich $U_{\alpha min} < U_\alpha' < U_{\alpha max}$ begrenzt wird. Der Betragsregler 27 kann beispielsweise ein PI-Regler sein. Die Begrenzungsspannungen $U_{\alpha min}$ und $U_{\alpha max}$ werden der Begrenzungsstufe 28 über die Eingänge 28c bzw. 28d zugeführt. Am Ausgang 28b der Begrenzungseinrichtung 28 steht die Steuerspannung $U_\alpha$ an, die dem Betragsstelleingang 30b des Steuersatzes 30 zugeführt wird. Während die Begrenzungsspannung $U_{\alpha min}$ fest vorgegeben wird, wird die Begrenzungsspannung $U_{\alpha max}$ vom Hochlaufgeber 29 geliefert. Dieser kann über den Eingang 29a mit dem Steuersignal Si6 beim Start des Wechselrichters $W_i$ auf Null gesetzt werden und läuft dann auf seinen Normalbetriebswert hoch.

Der Strom $I_W$ des Wechselrichters $W_i$ kann durch eine Strombegrenzungseinrichtung D, die auf den negativen Eingang 26d der Additionsstufe 26 wirkt, auf einen Maximalwert $I_{max}$ begrenzt werden. Der Maximalwert $I_{max}$ wird mit einem Spannungsteiler 20 aus der Konstantspannungsquelle 19 gewonnen. Aus dem Wechselrichterstrom $I_W$ wird durch Gleichrichtung mit dem Gleichrichter 21 und durch Glättung mit dem nachgeschalteten Glättungsfilter 22 der gleichgerichtete Istwert $|I_W|$ des Wechselrichterstroms $I_W$ gewonnen. Der gleichgerichtete Wechselrichterstrom $|I_W|$ wird in einer Additionsstufe 23 mit dem Maximalstrom $I_{max}$ verglichen, wobei $I_{max}$ auf den positiven Eingang 23b und $|I_W|$ auf den negativen Eingang 23a der Additionsstufe 23 gegeben wird. Die in der Additionsstufe 23 gebildete Regelabweichung $I_{max}-|I_W|$ wird vom Stromregler 24 in eine Spannung $U_{zus}$ umgesetzt. Der Ausgang des Stromreglers 24 ist über eine Diode 25 mit dem negativen Eingang 26d der Additionsstufe 26 verbunden. Die Spannung $U_{zus}$ ist positiv, solange $I_{max}$ größer als $I_W$ ist. Die Diode 25 ist so gepolt, daß die positive Spannung $U_{zus}$ gesperrt wird. Wenn $U_{zus}$ negativ wird, wirkt der Stromregler 24 über die nun in Durchlaßrichtung gepolte Diode 25 auf die Additionsstufe 26. Dadurch wird der positive Sollwert $U_{soll}$ abgesenkt, was wiederum eine Verkleinerung des Wechselrichterstroms $I_W$ zur Folge hat. Wenn der Wechselrichterstrom $I_W$ auf den Maximalwert $I_{max}$ gesunken ist, befindet sich das System im Gleichgewicht. In der Praxis wird man die Maximalwerte $I_{max}$ parallel arbeitender Wechselrichter proportional zur ihrem Nennstrom einstellen. Da auch die Stromaufteilung der Wechselrichterströme $I_W$ proportional zu ihrem Nennstrom erfolgt, setzen die Strombegrenzungen aller Wechselrichter nahezu gleichzeitig ein. Die definierte Stromaufteilung der Wechselrichter bleibt dann durch den Einfluß von $\Delta I_W$ in der Ersatzregelgröße $U_W'$ auch bei Strombegrenzung erhalten.

Mit den Steuersignalen Si1 bis Si6 kann die Regelung in Abhängigkeit vom Anlagen-Betriebszustand in verschiedene Betriebszustände gebracht werden. Zur Bildung der Steuersignale Si1 bis Si6 enthält jeder Wechselrichter $W_i$ eine eigene Prozeßsteuerung. Die wichtigsten Betriebszustände werden nachfolgend anhand der Tabelle auf Seite 32 erläutert. In der Tabelle ist der Logikzustand der Signale Si1 bis Si6 nach Figur 4 in Abhängigkeit vom Anlagenzustand dargestellt, wobei festgelegt ist, daß die in Figur 4 gezeigten Stellungen der Umschalter sich jeweils auf den Signalpegel « L » beziehen. Außerdem wurde der Logikzustand der Signale Si1 und Si3 bis Si6 willkürlich so festgelegt, daß bei Parallelbetrieb der Wechselrichter $W_i$ mit vorhandenem Netz alle Signalpegel « L » sind. Der Parallelbetrieb der Wechselrichter $W_i$ mit vorhandenem Netz entspricht dem Normalbetriebszustand der Anlage. Die Signale Si2.1 bis Si2.p entsprechen den Schaltstellungen der Wechselrichter-Schalter Sch1 bis Schp, d. h. sie geben Aufschluß darüber, welche der Wechselrichter $W_i$ mit der Sammelschiene S verbunden sind. Auch bei diesen Signalen entspricht das « L »-Signal dem Normal-Betriebszustand, d. h. wenn alle Wechselrichter parallelgeschaltet sind und mit Last arbeiten, liegen die Signale Si2.1 bis Si2.p alle auf « L ».

Zur Inbetriebnahme eines Wechselrichters wird dieser zunächst in die in der Tabelle mit Nr. 1 bezeichnete Startstellung gebracht, die unabhängig vom Netzzustand ist. Dazu wird von der Prozeßsteuerung mit dem Signal Si3 über den Umschalter 8 der Sollstrom $I_{soll}$ auf Null gesetzt, d. h. der Wechselrichter $W_i$ wird so geregelt, daß er keinen Ausgangsstrom liefert. Das Signal S4 ist auf « L »-Pegel, d. h. über den Umschalter 17 wird die Betrags-Sollspannung $U_{Bsoll}$ aus der internen Konstantspannungsquelle 19 gewonnen. Die Ausgangsspannung $U_W$ des Wechselrichters $W_i$ wird aber zunächst auf Null gehalten, da das Signal Si6 auf « H »-Potential ist und damit der Hochlaufgeber 29 auf Null festgehalten wird, so daß die Begrenzungseinrichtung 28 das Signal $U_\alpha$ auf Null setzt. Das Signal Si5 ist auf « H »-Pegel, d. h. der Phasenregler 5 ist ausgeschaltet und der Taktgeber 30c im Steuersatz 30 schwingt frei mit der intern vorgegebenen Frequenz.

| Nr. | Betriebszustand | Si1 | Si2.1 bis Si2.p | Si3 | Si4 | Si5 | Si6 |
|---|---|---|---|---|---|---|---|
| 1 | Startstellung (Netzzustand beliebig) | X * | X | H | L | H | H |
| 2 | Spannungs-Hochlauf (Netzzustand beliebig) | X | X | H | L | H | L |
| 3 | Anpassung an Sammelschiene und Parallelbetrieb ohne Last (Netz vorhanden) | L | X | H | H | L | L |
| 4 | Parallelbetrieb mit Last (Netz vorhanden) | L | entsprechend Anlagenzustand | L | L | L | L |
| 5 | Anpassung an Sammelschiene und Parallelbetrieb ohne Last (Netz nicht vorhanden) | H | X | H | H | L | L |
| 6 | Parallelbetrieb mit Last (Netz nicht vorhanden. Eigen taktung) | X | entsprechend Anlagenzustand | L | L | H | L |
| 7 | Parallelbetrieb mit Last (Netz nicht vorhanden, fremd- gesteuerte Eigentaktung) | H | entsprechend Anlagenzustand | L | L | L | L |

* X = Zustand beliebig

Der Betriebszustand « Startstellung » ist also dadurch charakterisiert, daß der Wechselrichter $W_i$ die Ausgangsspannung $U_W = 0$ hat und der Taktgeber 30c frei schwingt, d. h. keine Synchronisierung mit dem Netz NE oder den übrigen Wechselrichtern $W_i$ auftritt. Die Signalpegel des Signals Si1 und der Signale Si2.1 bis Si2.p sind dabei beliebig.

Zum Aufbau der Ausgangsspannung $U_W$ des Wechselrichters $W_i$ schaltet die Prozeßsteuerung in den Betriebszustand « Spannungshochlauf », der sich von der Startstellung dadurch unterscheidet, daß das Signal Si6 auf « L »-Pegel gesetzt wird, so daß das Begrenzungssignal $U_{\alpha max}$ ansteigt. Damit kommt die Sollspannung $U_{soll}'$ die in diesem Betriebszustand der Referenzspannung $U_{ref}$ entspricht, zum Eingriff. Da $I_{soll}$ nach wie vor auf Null gesetzt ist und der Wechselrichter $W_i$ nicht mit der Sammelschiene S verbunden ist, so daß auch $I_W$ Null ist, ergibt sich auch für $\Delta I$ der Wert Null. Die Ersatzregelgröße $U_W'$ ist also identisch mit der Wechselrichterspannung $U_W'$ die mit der Referenzspannung $U_{ref}$ als Sollspannung $U_{soll}$ verglichen wird. Dadurch wird also die Wechselrichterspannung $U_W$ mit der Referenzspannung $U_{ref}$ in Übereinstimmung gebracht.

Zur Anpassung des Wechselrichters $W_i$ an die Sammelschiene S und Parallelbetrieb ohne Last bei vorhandenem Netz wird das Steuersignal Si1 auf « L »-Pegel geschaltet, d. h. der Phasen-Sollwert $\varphi_{soll}$ wird über den Umschalter 1 aus der Netzspannung $U_N$ gewonnen. Gleichzeitig wird das Signal Si5 auf « L » gesetzt, d. h. der Phasenregler 5 wird eingeschaltet. Der Wechselrichter $W_i$ wird also mit dem Netz synchronisiert. In der Rechenschaltung A zur Bildung der Ersatzregelgröße $U_W'$ bleibt der Sollwert $I_{soll}$ auf Null. Da wegen der fehlenden Last auch der Wechselrichterausgangsstrom $I_W$ auf Null ist, bleibt die Ersatzregelgröße $U_W'$ weiterhin identisch mit der Wechselrichterspannung $U_W$. Im Betragsregelkanal B wird jedoch das Signal Si4 auf « H » geschaltet, so daß die Spannung $U_S$ der Sammelschiene S zur Bildung des Betrags-Sollwertes $U_{Bsoll}$ herangezogen wird. Die Wechselrichterspannung $U_W$ wird also auf den Spannungswert $U_S$ der Sammelschiene S geregelt. In diesem Zustand erfolgt die Zuschaltung des Wechselrichters W auf die Sammelschiene S.

Im Betriebszustand « Parallelbetrieb mit Last bei vorhandenem Netz » wird die Phasenlage wie beim vorher geschilderten Betriebszustand nach dem Netz geregelt. Zur Bildung der Ersatzregelgröße $U_W'$ wird jedoch dabei zur Wechselrichterspannung $U_W$ die Spannungsabweichung $\Delta U$ addiert. Dazu wird das Signal Si3 auf « L » gesetzt, so daß der Additionsstufe 9 der in der Multiplikationsstufe 6 errechnete Sollwert $I_{soll}$ zugeführt wird. Dazu ist es erforderlich, daß die Signal Si2.1 bis Si2.p für die Multiplikationsstufe 6 den Schaltstellungen der Wechselrichterschalter Sch1 bis Schp entsprechen. Die Ersatzregelgröße $U_W'$ setzt sich also in diesem Fall aus der mit der Sammelschienenspannung $U_S$ übereinstimmenden Wechselrichterspannung $U_W$ und dem Produkt aus der Stromabweichung $\Delta I_W \cdot Z_x$ zusammen. Die Ersatzregelgröße $U_W'$ wird in der Betragsregeleinrichtung C mit der Referenzspannung $U_{ref}$ als Betrags-Sollwert $U_{Bsoll}$ verglichen, da das Signal S4 auf « L » ist.

Bei den bisher geschilderten Betriebszuständen « Anpassung an Sammelschiene und Parallelbetrieb ohne Last » und « Parallelbetrieb mit Last » wurde davon ausgegangen, daß das Netz intakt ist. In diesen Fällen wird über die Netzschiene $S_N'$ an die nach Fig. 1 jeder Wechselrichter $W_i$ über einen Gleichrichter G angeschlossen ist, auf die Netzspannung synchronisiert, um ohne weiteres eine Rückschaltung auf das Netz NE zu ermöglichen, wenn Wechselrichter gestört sind oder die Leistung der Wechselrichter für die Last nicht mehr ausreicht. Die Spannung der Wechselrichter wird allerdings nach der für jeden Wechselrichter $W_i$ gleichen Referenzspannung $U_{ref}$ und nicht nach dem Netz geregelt, da sich sonst Spannungsschwankungen des Netzes auf die Wechselrichter übertragen würden.

Wenn das Netz ausfällt, so muß die Prozeßsteuerung jedes Wechselrichters dies erfassen und die Betriebszustände entsprechend abändern. Beim Betriebszustand « Anpassung an Sammelschiene und Parallelbetrieb ohne Last » muß bei Betrieb mit ausgefallenem Netz im Vergleich zum Betrieb mit vorhandenem Netz lediglich das Signal Si1 auf « H » gesetzt werden, d. h. als Synchronisierspannung wird in diesem Fall nicht die Netzspannung $U_N$, sondern die Sammelschienenspannung $U_S$ verwendet.

Bei ausgefallenem Netz NE kann das Netz nicht mehr die Frequenzführung übernehmen. Die Frequenzführung muß daher von einem der Wechselrichter $W_i$ übernommen werden. Dazu ist in der Prozeßsteuerung jedem Wechselrichter $W_i$ eine bestimmte Rangfolge zugeordnet, wobei der funktionsfähige Wechselrichter $W_i$ mit der höchsten Rangordnung die Frequenzführung übernimmt. Wenn dieser ausfällt, wird dies von der Prozeßsteuereinrichtung erkannt und der Wechselrichter $W_i$ mit der nächsthöheren Rangfolge wird frequenzführend.

Der frequenzführende Wechselrichter $W_i$ zeichnet sich dadurch aus, daß er Eigentaktung besitzt, d. h. das Signal Si5 ist auf « H »-Pegel. Damit ist der Phasenregler 5 des eigengetakteten Wechselrichters ausgeschaltet und der Taktgeber 30c im Steuersatz 30 dieses Wechselrichters $W_i$ schwingt frei. Das Steuersignal Si1 ist dabei beliebig, da der Phasensollwert $\varphi_{soll}$ nicht ausgewertet wird. Ansonsten gelten die bereits im Zusammenhang mit dem Betriebszustand « Parallelbetrieb mit Last bei vorhandenem Netz » beschriebenen Signalpegel. Bei Parallelbetrieb mit Last bei nicht vorhandenem Netz werden alle Wechselrichter $W_i$ mit Ausnahme des führenden mit fremdgesteuerter Eigentaktung mit Signalzuständen nach Punkt 7 der Tabelle betrieben. Die Wechselrichter mit fremdgesteuerter Eigentaktung unterscheiden sich von dem Wechselrichter mit Eigentaktung dadurch, daß der Signalpegel Si5 auf « L » ist, und damit der Phasenregler 5 in Betrieb ist und daß wegen des « H »-Pegels des Signals Si1 der Phasensollwert $\varphi_{soll}$ aus der Sammelschienenspannung abgeleitet wird. Die Wechselrichter mit fremdgesteuerter Eigentaktung werden also durch die Sammelschienenspannung $U_S$ synchronisiert, wobei die

Frequenz der Sammelschienenspannung $U_S$ durch den Wechselrichter mit Eigentaktung vorgegeben ist.

Im Zusammenhang mit der Ableitung des Regelverfahrens wurde gezeigt, daß die beschriebene Regelung auch bei Parallelbetrieb mit dem Netz zu einer gewünschten Lastaufteilung führt. Dabei wurde davon ausgegangen, daß vom Netz kein Laststrom übernommen wird. Wenn es erwünscht ist, kann man die Übernahme eines definierten Laststroms dadurch erreichen, daß man den Gewichtsfaktor $\gamma$ in der Multiplikationsschaltung 6 verringert und somit den Sollstrom $I_{soll}$ herabsetzt. Es ergibt sich also eine Verringerung des Sollstroms $I_{soll}$ gegenüber der nach Gleichung 3 ermittelten Größe, so daß die Summe aller Sollströme $I_{soll}$ der Wechselrichter $W_i$ unter dem Sammelschienenstrom $I_S$ liegt. Die Differenz zwischen Sammelschienenstrom $I_S$ und Summe der Sollströme $I_{soll}$ wird im ausgeregelten Zustand vom Netz übernommen.

Fig. 5 zeigt vereinfacht den Aufbau einer Multiplikationsstufe 6, im Beispiel mit vier Steuereingängen 6c bis 6f für vier parallelgeschaltete Wechselrichter. Das am Eingang 6a anstehende Signal wird über den Widerstand R1 auf den invertierenden Eingang a des Operationsverstärkers OP geführt, dessen nicht invertierender Eingang b mit Masse verbunden wird. Das Signal kann am Ausgang c des Operationsverstärkers OP abgenommen werden und wird auf den Ausgang 6b der Multiplikationsstufe 6 geführt. Die Verstärkung des Operationsverstärkers OP wird durch Rückführungen festgelegt. Dazu liegen zwischen dem Eingang a des Operationsverstärkers und dem Ausgang c vier Reihenschaltungen, jeweils bestehend aus Feldeffekttransistor-Schalter F1 bis F4 und Rückführwiderstand R2 bis R5. Die Rückführwiderstände R2 bis R5 werden wirksam, wenn der zugeordnete Feldeffekttransistorschalter F1 bis F4 durch ein Signal am zugeordneten Signaleingang 6c bis 6f eingeschaltet ist. Die Verstärkung der Multiplikationsstufe 6 ist also abhängig vom Verhältnis des Widerstandswertes der eingeschalteten Rückführwiderstände R2 bis R5 zum Widerstandswert des Widerstandes R1. Dabei werden die Werte der Widerstände R2 bis R5 so gewählt, daß sie den Nennströmen der Wechselrichter W1 bis W4 entsprechen und R1 wird entsprechend dem Nennstrom des Wechselrichters $W_i$ gewählt, dem die Multiplikationsschaltung 6 zugeordnet ist. Durch Zuschaltung von Widerständen R2 bis R5 mit den Signalen $2 \cdot 1$ bis $2 \cdot 4$ an den Signaleingängen 6c bis 6f erhält man also in Abhängigkeit von der Zahl der parallelarbeitenden Wechselrichter den richtigen Stromsollwert $I_{soll}$ nach Gleichung 3.

Die in der Schaltung nach Fig. 4 vorgesehenen Umschalter können im einfachsten Fall Relais sein, zweckmäßigerweise werden aber auch dafür Feldeffekttransistor-Schalter eingesetzt.

Als Rechteckbildner 2 und 3 können übersteuerte Verstärker, z. B. Operationsverstärker ohne Rückführung eingesetzt werden.

Den Phasenkomparator 4 kann man beispielsweise als Integrator ausbilden, der mit der ersten, an einem Eingang 4a oder 4b auftretenden Impulsflanke gestartet und mit der darauffolgenden Impulsflanke am jeweils anderen Eingang 4a oder 4b gestoppt wird. Das Ausgangssignal des Integrators ergibt dadurch ein Maß für die Phasendifferenz zwischen den Impulsfolgen an den Eingängen 4a und 4b.

Der Aufbau und die Arbeitsweise von Steuersätzen ist in dem Buch « Industrieelektronik » von D. Ernst und D. Ströle, Springer-Verlag, Berlin 1973, Seite 53 bis 57 beschrieben.

Mit dem beschriebenen Regelverfahren und der nach diesem Verfahren arbeitenden Schaltung wird es also möglich, alle erforderlichen Betriebszustände für die Wechselrichter W lediglich durch Umschalten der Sollwerte für die Regelung einzustellen, während die Regelkreise selbst nicht umgeschaltet zu werden brauchen. Damit erhält man den Vorteil, daß sich bei Umschaltung zwischen den Betriebszuständen keine großen Regelschwankungen ergeben. Besonders vorteilhaft ist es, daß zur Synchronisierung der Wechselrichter untereinander bzw. mit dem Netz kein Analog-Signalaustausch zwischen den Wechselrichtern erfolgen muß. Ein derartiger Signalaustausch hat sich in der Praxis als störanfällig erwiesen. Bei der beschriebenen Regelung erfolgt die Synchronisierung über die Netzschiene oder die Sammelschiene als robuste Starkstromverbindung, bei deren Ausfall die Stromversorgung ohnehin nicht mehr möglich wäre. Zwischen den Wechselrichtern müssen lediglich Zustandssignale ausgetauscht werden, die nur gelegentlich ihren Signalpegel ändern und die durch fehlergeschützte Codierung mit großer Sicherheit übertragen werden können.

## Ansprüche

1. Verfahren zur Regelung von Spannung und Lastaufteilung sowie zur Synchronisierung mehrerer Wechselrichter ($W_i$), deren Ausgänge mit einer gemeinsamen Sammelschiene (S) verbindbar sind, dadurch gekennzeichnet, daß für jeden Wechselrichter ($W_i$) eine Ersatzregelgröße $U_{Wi}' = U_{Wi} + \Delta I_i \cdot Z_{xi}$ gebildet wird und zur Regelung jedes Wechselrichters ($W_i$) die Ersatzregelgröße $U_{Wi}'$ mit einer für alle Wechselrichter ($W_i$) gleichen Sollspannung ($U_{soll\,i}$) in Betrag und Phase verglichen wird, wobei $U_{Wi}$ die Ausgangsspannung des Wechselrichters ($W_i$), $\Delta I_i$ die Abweichung des Ausgangsstroms ($I_{Wi}$) des Wechselrichters ($W_i$) von einem vorgegebenen Sollstrom ($I_{soll\,i}$) und $Z_{xi}$ eine komplexe Impedanz ist.

2. Verfahren nach Anspruch 1, dadurch gekennzeichnet, daß für jeden Wechselrichter ($W_i$) Wirk- und Blindanteil der komplexen Impedanz ($Z_{xi}$) proportional dem Wirk- und Blindanteil des Innenwiderstands ($Z_{Wi}$) des Wechselrichters ($W_i$) sind.

3. Verfahren zur Regelung mehrerer Wechselrichter mit getrennten Phasen- und Betragsregelkanälen nach Anspruch 1 oder 2, wobei die Sollspannung in eine Betrags- und eine Phasen-Sollspannung aufgespalten ist, dadurch gekennzeichnet, daß für jeden Wechselrichter ($W_i$) Phasenlage und Betrag der Ersatzregelgröße $U_{Wi}'$ in je einem gesonderten Phasenregelkanal (B) mit der Phasenlage der Phasen-Sollspannung ($U_{\varphi soll\ i}$) bzw. Betragsregelkanal (C) mit dem Betrag der Betrags-Sollspannung ($U_{Bsoll\ i}$) verglichen werden.

4. Verfahren nach Anspruch 3, wobei jeder Wechselrichter einen Steuersatz (30) mit einem freischwingenden Taktgeber enthält, dadurch gekennzeichnet, daß Frequenz und Phasenlage des Taktgebers (30c) durch den Phasenregelkanal (B) nur innerhalb bestimmter Grenzen beeinflußbar sind.

5. Verfahren nach Anspruch 3 oder 4, dadurch gekennzeichnet, daß ein führender Wechselrichter ($W_i$) die Frequenz ($f_s$) der Sammelschienenspannung ($U_S$) bestimmt, wobei bei diesem führenden Wechselrichter ($W_i$) die Phasen-Sollspannung ($U_{\varphi soll\ i}$) eine Spannung mit konstanter Frequenz ist und bei den übrigen Wechselrichtern die Phasen-Sollspannung ($U_{\varphi soll\ i}$) die Sammelschienenspannung ($U_S$) ist.

6. Verfahren nach Anspruch 4, dadurch gekennzeichnet, daß ein führender Wechselrichter ($W_i$) die Frequenz ($f_s$) der Sammelschienenspannung ($U_S$) bestimmt, wobei bei diesem führenden Wechselrichter ($W_i$) die Frequenz- und Phasenlage des Taktgebers (30c) im Steuersatz (30) nicht beeinflußt wird und wobei bei den anderen Wechselrichtern ($W_i$) die Phasen-Sollspannung ($U_{\varphi soll}$) die Sammelschienenspannung ($U_S$) ist.

7. Verfahren nach einem der Ansprüche 3 bis 6, dadurch gekennzeichnet, daß ein führender Wechselrichter ($W_i$) den Betrag ($U_S$) der Sammelschienenspannung ($U_S$) bestimmt, wobei bei diesem führenden Wechselrichter ($W_i$) die Betrags-Sollspannung ($U_{Bsoll\ i}$) eine Spannung mit konstantem Betrag ist und bei den übrigen Wechselrichtern die Betrags-Sollspannung ($U_{Bsoll\ i}$) die Sammelschienenspannung ($U_S$) ist.

8. Verfahren nach einem der Ansprüche 5 bis 7, dadurch gekennzeichnet, daß jedem Wechselrichter ($W_i$) eine Rangstufe zugeordnet ist, wobei von den mit der Sammelschiene (S) verbundenen und funktionsfähigen Wechselrichtern ($W_1$-$W_p$) der Wechselrichter ($W_i$) mit der höchsten Rangstufe der führende Wechselrichter ist.

9. Verfahren nach Anspruch 3, wobei die Sammelschiene mit einem Netz verbindbar ist, dadurch gekennzeichnet, daß bei vorhandener Netzspannung ($U_N$) für den Phasenregelkanal (B) aller Wechselrichter ($W_i$) als Phasen-Sollwert ($U_{\varphi soll\ i}$) die Netzspannung $U_N$ verwendet wird.

10. Verfahren nach einem der Ansprüche 1 bis 4, wobei ein Netz mit der Sammelschiene verbunden ist, dadurch gekennzeichnet, daß bei jedem Wechselrichter ($W_i$) die Sollspannung ($U_{soll\ i}$) die Sammelschienenspannung ($U_S$) ist.

11. Verfahren nach einem der Ansprüche 1 bis 10, dadurch gekennzeichnet, daß der Sollstrom ($I_{soll\ i}$) in einer Rechenschaltung (A) nach folgender Gleichung ermittelt wird :

$$I_{soll\ i} = \frac{I_{ni}}{\displaystyle\sum_i^p I_{ni}} \cdot I_S$$

wobei $I_S$ der Laststrom der Sammelschiene (S), $I_{ni}$ der Nennstrom des Wechselrichters ($W_i$) und p die Anzahl der mit der Sammelschiene (S) verbundenen Wechselrichter ($W_i$) ist.

12. Verfahren nach einem der Ansprüche 1 bis 10, wobei ein Netz mit der Sammelschiene verbunden ist, dadurch gekennzeichnet, daß der Sollstrom ($I_{soll\ i}$) in einer Rechenschaltung (A) nach folgender Gleichung ermittelt wird :

$$I_{soll\ i} = \frac{I_{ni}}{\displaystyle\sum_1^p I_{ni} + I_{nS}} \cdot I_S$$

wobei $I_S$ der Laststrom der Sammelschiene (S), $I_{ni}$ der Nennstrom des Wechselrichters ($W_i$), p die Anzahl der mit der Sammelschiene (S) verbundenen Wechselrichter ($W_i$) und $I_{nS}$ ein Anteil für den Sollstrom des Netzes ist.

13. Verfahren nach einem der Ansprüche 1 bis 12 mit einer Strombegrenzung für jeden der Wechselrichter, dadurch gekennzeichnet, daß der Betrag der Sollspannung ($U_{soll\ i}$) des Wechelrichters ($W_i$) verringert wird, wenn der Ausgangsstrom ($I_{Wi}$) dieses Wechselrichters ($W_i$) einen Grenzwert ($I_{max}$) überschreitet.

14. Verfahren nach einem der Ansprüche 3 bis 13, dadurch gekennzeichnet, daß die Ausgangsspannung ($U_\alpha'$) des Betragsregelkanals im Wertebereich durch einen oberen und einen unteren Grenzwert ($U_{\alpha max}$, $U_{\alpha min}$) begrenzt wird.

15. Verfahren nach Anspruch 14, dadurch gekennzeichnet, daß zum Anfahren eines nicht mit der Sammelschiene (S) verbundenen Wechselrichters ($W_i$) der obere Grenzwert ($U_{\alpha max}$) von Null beginnend zu einem Nennwert verstellt wird.

16. Schaltungsanordnung zur Bildung der Ersatzregelgröße für die Durchführung eines Verfahrens nach einem der Ansprüche 1 bis 5, dadurch gekennzeichnet, daß ein Stromdetektor für den Sammelschienenstrom ($I_S$) mit dem Eingang einer Multiplikationsschaltung (6) verbunden ist, deren Ausgang mit dem negativen Eingang (9a) einer Summierstufe (9) verbunden ist, daß der positive Eingang (9b) der Summierstufe (9) mit einem Stromdetektor für den Ausgangsstrom ($I_{Wi}$) des Wechselrichters ($W_i$) verbunden ist und daß dem Ausgang (9c) der Summierstufe (9) ein Verstärker (10) mit dem Verstärkungsfaktor $Z_x$ nachgeschaltet ist, dessen Ausgang mit dem ersten positiven Eingang (11b) der Summierstufe (11) verbunden ist, wobei der zweite positive Eingang (11a) der Summierstufe (11) mit einem Spannungsdetektor für die Wechselrichterausgangsspannung ($U_{Wi}$) verbunden ist.

17. Schaltungsanordnung nach Anspruch 16, dadurch gekennzeichnet, daß die Multiplikationsschaltung (6) einen Operationsverstärker (OP) enthält, dessen invertierender Eingang (OPa) über einen Widerstand (R1) mit dem Eingang (6a) der Rechenschaltung (6) verbunden ist, dessen nicht invertierender Eingang (OPb) an Masse liegt, dessen Ausgang (OPc) mit dem Ausgang der Multiplikationsschaltung (6) verbunden ist und der zwischen Ausgang (OPc) und invertierendem Eingang (OPa) mehrere Reihenschaltungen aufweist, die jeweils aus einem Rückführwiderstand (R2 bis R5) und einem Halbleiterschalter (F1 bis F4) bestehen und wobei die Basis jedes Halbleiterschalters (F1 bis F4) mit je einem Signaleingang (6c bis 6f) der Multiplikationsschaltung (6) verbunden ist.

18. Schaltungsanordnung zur Phasenregelung für die Durchführung eines Verfahrens nach einem der Ansprüche 3 bis 15, dadurch gekennzeichnet, daß der Phasenregelkanal (B) einen Phasendiskriminator (4) enthält, dessen Eingänge (4a bzw. 4b) mit dem Ausgang der Rechenschaltung (A) für die Bildung der Ersatzregelgröße ($U_{Wi}'$) bzw. mit dem Spannungsdetektor für die Phasen-Sollspannung ($U_{\varphi soll}$) jeweils über als übersteuerte Verstärker ausgeführte Rechteckbildner (2 bzw. 3) verbunden sind, wobei der Ausgang des Phasendiskriminators (4c) über den Phasenregler (5) mit dem Frequenzsteuereingang (30a) des Steuersatzes (30) verbunden ist.

19. Schaltungsanordnung zur Betragsregelung für die Durchführung eines Verfahrens nach einem der Ansprüche 3 bis 15, dadurch gekennzeichnet, daß ein Betragsregelkanal (C) eine Summierstufe (26) enthält, deren positiver Eingang (26a) mit einem Spannungsdetektor für den Betrags-Sollwert ($U_{Bsoll\ i}$) und deren negativer Eingang (26b) mit dem Ausgang einer Rechenschaltung zur Bildung der Ersatzregelgröße ($U_{Wi}'$) verbunden ist, daß der Summierstufe ein Betragsregler (27) nachgeschaltet ist, der über eine Begrenzungseinrichtung (28) mit dem Betragsstelleingang (30b) des Steuersatzes (30) verbunden ist, wobei die Begrenzungseinrichtung (28) einen mit einem festen Spannungswert ($U_{\alpha min}$) beaufschlagten ersten Begrenzungseingang 28c zur Minimalwertbegrenzung und einem mit einem als Funktionsgenerator ausgebildeten Hochlaufgeber (29) verbundenen zweiten Begrenzungseingang (28d) zur Maximalwertbegrenzung aufweist und wobei der Hochlaufgeber (29) über einen Steuereingang (29a) auf Null setzbar ist.

20. Schaltungsanordnung zur Strombegrenzung für die Durchführung eines Verfahrens nach Anspruch 13, dadurch gekennzeichnet, daß ein Strombegrenzungskanal (D) eine Summierstufe (23) enthält, wobei der negative Eingang (23a) der Summierstufe (23) über einen Gleichrichter (21) und ein Glättungsfilter (22) mit einem Stromdetektor für den Wechselrichterausgangsstrom ($I_{Wi}$) und der positive Eingang (23b) der Summierstufe (23) mit einer Referenzspannungsquelle (20) verbunden ist und wobei der Ausgang (23c) der Summierstufe (23) über einen Strombegrenzungsregler (27) und eine Diode (25) mit dem negativen Eingang (26d) einer Summierstufe (26) verbunden ist, an deren positivem Eingang (26a) die Sollspannung ($U_{soll\ i}$) anliegt.

## Claims

1. A process for the regulation of voltage and load distribution and for the synchronisation of a plurality of inverters ($W_i$) whose outputs can be connected to a common bus bar (S), characterised in that an equivalent regulating magnitude $U_{Wi}' = U_{Wi} + \Delta I_i \cdot Z_{xi}$ is formed for each inverter ($W_i$) and in order to regulate each inverter ($W_i$) the equivalent regulating variable $U_{Wi}'$ is compared with a theoretical voltage ($U_{soll\ i}$), which is the same in respect of magnitude and phase for all inverters ($W_i$), $U_{Wi}$ being the output voltage of the inverter ($W_i$), $\Delta I_i$ being the deviation of the output current ($I_{Wi}$) of the inverter ($W_i$) from a predetermined theoretical current ($I_{soll\ i}$), and $Z_{xi}$ being a complex impedance.

2. A process as claimed in Claim 1, characterised in that for each inverter ($W_i$), the active and reactive portion of the complex impedance ($Z_{xi}$) is proportional to the active and reactive portion of the internal resistance ($Z_{Wi}$) of the inverter ($W_i$).

3. A process for the regulation of a plurality of inverters with separate phase regulating channels and magnitude regulating channels as claimed in Claim 1 or 2, wherein the theoretical voltage is divided into a theoretical magnitude voltage and a theoretical phase voltage, characterised in that for each inverter ($W_i$), the phase position and magnitude of the equivalent regulating variable $U_{Wi}'$ are each compared with the phase position of the theoretical phase voltage ($U_{\varphi soll\ i}$) in a separate phase regulating channel (B) and with the magnitude of the theoretical magnitude voltage ($U_{Bsoll\ i}$) in a separate magnitude regulating channel (C).

4. A process as claimed in Claim 3, wherein each inverter comprises a control set with a free-running pulse generator, characterised in that the frequency and phase position of the impulse generator (30c) can be influenced by the phase regulating channel (B) only within specific limits.

5. A process as claimed in Claim 3 or 4, characterised in that a governing inverter ($W_i$) determines the frequency ($f_s$) of the bus bar voltage ($U_S$), where in this governing inverter ($W_i$), the theoretical phase voltage ($U_{\varphi soll\ i}$) is a voltage with constant frequency and in the other inverters, the theoretical phase voltage ($U_{\varphi soll\ i}$) is the bus bar voltage ($U_S$).

6. A process as claimed in Claim 3, characterised in that in a governing inverter ($W_i$) that determines the frequency ($f_s$) of the bus bar voltage ($U_S$) the frequency position and phase position of the impulse generator (30c) are not influenced in the control set (30), whereas in the other inverters ($W_i$), the theoretical phase voltage ($U_{\varphi soll\ i}$) is the bus bar voltage ($U_S$).

7. A process as claimed in one of Claims 3 to 6, characterised in that in a governing inverter ($W_i$) that determines the magnitude ($U_S$) of the bus bar voltage ($U_S$), the theoretical magnitude voltage ($U_{Bsoll\ i}$) is a voltage with a constant magnitude, whereas in the other inverters the theoretical magnitude voltage ($U_{Bsoll\ i}$) is the bus bar voltage ($U_S$).

8. A process as claimed in one of Claims 5 to 7, characterised in that each inverter ($W_i$) is assigned a rank, and the governing inverter of the inverters ($W_1$-$W_p$) which are operable and connected to the bus bar is that inverter ($W_i$) having the highest rank.

9. A process as claimed in Claim 3, wherein the bus bar can be connected to a mains circuit, characterised in that when a mains voltage ($U_N$) is provided for the phase regulating channel (B) of all inverters ($W_i$) the mains voltage ($U_N$) is used as the theoretical phase value ($U_{\varphi soll\ i}$).

10. A process as claimed in one of Claims 1 to 4, wherein a mains circuit is connected to the bus bar, characterised in that in each inverter ($W_i$), the theoretical voltage ($U_{soll\ i}$) is the bus bar voltage ($U_S$).

11. A process as claimed in one of Claims 1 to 10, characterised in that the theoretical current ($I_{soll\ i}$) is determined in a calculating circuit (A) in accordance with the following equation :

$$I_{soll\ i} = \frac{I_{ni}}{\displaystyle\sum_{1}^{p} I_{ni}} \cdot I_S$$

where $I_S$ is the load current of the bus bar (S), $I_{ni}$ is the nominal current of the inverter ($W_i$) and p is the number of inverters ($W_i$) connected to the bus bar (S).

12. A process as claimed in one of Claims 1 to 10, wherein a mains circuit is connected to the bus bar, characterised in that the theoretical current ($I_{soll\ i}$) is determined in a calculating circuit (A) in accordance with the following equation :

$$I_{soll\ i} = \frac{I_{ni}}{\displaystyle\sum_{1}^{p} I_{ni} + I_{nS}} \cdot I_S$$

where $I_S$ is the load current of the bus bars (S), $I_{ni}$ is the nominal current of the inverter ($W_i$), p is the number of inverters ($W_i$) connected to the bus bar (S) and $I_{nS}$ is a portion for the theoretical current of the network.

13. A process as claimed in one of Claims 1 to 12 with a current limitation for each of the inverters, characterised in that the magnitude of the theoretical voltage ($U_{soll\ i}$) of the inverter ($W_i$) is reduced if the output current ($I_{Wi}$) of this inverter ($W_i$) surpasses a limit value ($I_{max}$).

14. A process as claimed in one of Claims 3 to 13, characterised in that the output voltage ($U_\alpha'$) of the magnitude regulating channel is limited in the value range by an upper and a lower limit value ($U_{\alpha max}$, $U_{\alpha min}$).

15. A process as claimed in Claim 14, characterised in that in order to start an inverter ($W_i$), which is not connected to the bus bar (S), the upper limit value ($U_{\alpha max}$) is adjusted to a nominal value starting from zero.

16. A circuit arrangement for the formation of the equivalent regulating variable for the implementation of a process in accordance with Claims 1 to 5, characterised in that a current detector for the bus bar

17

# 0 014 415

current ($I_S$) is connected to the input of a multiplication circuit (6) whose output is connected to the negative input (9a) of a summing stage (9), and that the positive input (9b) of the summing stage (9) is connected to a current detector for the output current ($I_{Wi}$) of the inverter ($W_i$), and that the output (9c) of the summing stage (9) is followed by an amplifier (10) which has the amplification factor $Z_x$ and whose output is connected to the first positive input (11b) of the summing stage (11), the second positive input (11a) of the summing stage (11) being connected to a voltage detector for the inverter output voltage ($U_{Wi}$).

17. A circuit arrangement as claimed in Claim 16, characterised in that the multiplication circuit (6) comprises an operational amplifier (OP) whose inverting input (OPa) is connected via a resistor (R1) to the input (6a) of the calculating circuit (6) and whose non-inverting input (OPb) is connected to earth, and whose output (OPc) is connected to the output of the multiplication circuit (6), and which has a plurality of series connections between the output (OPc) and the inverting input (OPa), which series connections respectively consist of a feedback resistor (R2 to R5) and a semiconductor switch (F1 to F4) and where the base of each semiconductor switch (F1 to F4) is connected to a signal input (6c to 6f) of the multiplication circuit (6) in each case.

18. A circuit arrangement for the phase regulation for the implementation of a process as claimed in one of Claims 3 to 15, characterised in that the phase regulating channel (B) comprises a phase discriminator (4) whose inputs (4a and 4b) are connected to the output of the calculating circuit (A) for the formation of the equivalent regulating magnitude ($U_{Wi}'$) or to the voltage detector for the phase theoretical voltage ($U_{\varphi soll}$), as the case may be, by means of a rectangular shaper (2 and 3) designed as over-driven amplifiers, where the output of the phase discriminator (4c) is connected via the phase regulator (5) to the frequency control input (30a) of the control set (30).

19. A circuit arrangement for the magnitude regulation for the implementation of a process as claimed in one of Claims 3 to 15, characterised in that a magnitude channel (C) comprises a summing stage (26) whose positive input (26a) is connected to a voltage detector for the theoretical magnitude value ($U_{Bsoll\,i}$) and whose negative input (26b) is connected to the output of a calculating circuit for the formation of the equivalent regulating variable ($U_{Wi}'$), and that the summing stage (26) is followed by a magnitude regulator (27) which is connected via a limitation device (28) to the magnitude setting input (30b) of the control set (30), where the limitation device (28) possesses a first limitation input (28c) for the limitation of the minimal value and a second limitation input (28d), which is connected to an increasing level generator (29) designed as a function generator and where the increasing level generator (29) can be set to zero by means of a control input (29a).

20. A circuit arrangement for the current limitation for the implementation of a process as claimed in Claim 13, characterised in that a current limitation channel (D) comprises a summing stage (23), where the negative input (23a) of the summing stage (23) is connected via a rectifier (21) and a smoothing filter (22) to a current detector for the inverter output current ($I_{Wi}$) and the positive input (23b) of the summing stage (23) is connected to a reference voltage source (20), and where the output (23c) of the summing stage (23) is connected via a current limitation regulator (27) and a diode (25) to the negative input (26d) of a summing stage (26) at whose positive input (26a) is applied the theoretical voltage ($U_{soll\,i}$).

## Revendications

1. Procédé pour la régulation de la tension et la répartition de la charge, ainsi que pour la synchronisation de plusieurs onduleurs ($W_i$), dont les sorties sont susceptibles d'être reliées à une barre omnibus commune (S), caractérisé par le fait que pour chaque onduleur ($W_i$) on forme la grandeur régulée de remplacement $U_{Wi}' = U_{Wi} + \Delta I_i \cdot Z_{xi}$ et que pour la régulation de chaque onduleur ($W_i$) la grandeur régulée de remplacement ($U_{Wi}'$) est comparée, en grandeur et en phase, à une tension de référence ($U_{soll\,i}$) identique pour tous les onduleurs, $U_{Wi}$ étant la tension de sortie de l'onduleur ($W_i$), $\Delta I_i$ l'écart du courant de sortie ($I_{Wi}$) de l'onduleur ($W_i$) par rapport à un courant de référence ($I_{soll\,i}$) donné à l'avance et $Z_{xi}$ une impédance complexe.

2. Procédé selon la revendication 1, caractérisé par le fait que pour chaque onduleur ($W_i$) la composante active et la composante réactive de l'impédance complexe ($Z_{xi}$) sont proportionnelles à la composante active et à la composante réactive de la résistance interne ($Z_{Wi}$) de l'onduleur ($W_i$).

3. Procédé pour la régulation de plusieurs onduleurs à canaux de réglage séparés pour la phase et la valeur, selon la revendication 1 ou 2, dans lequel la tension de consigne est séparée en une tension de consigne de la valeur et de la phase, caractérisé par le fait que pour chaque onduleur ($W_i$) on compare la position de phase et la valeur de la grandeur régulée de remplacement $U_{Wi}$, dans respectivement un canal de réglage de phase séparé (B) avec la position de phase de la tension de consigne de phase ($U_{\varphi soll\,i}$) ou du canal de régulation de la valeur (C) avec la valeur de la tension de consigne ($U_{Bsoll\,i}$).

4. Procédé selon la revendication 3, dans lequel chaque onduleur comporte un dispositif de commande à générateur de cadence oscillant librement, caractérisé par le fait que la fréquence et la position de phase du générateur de cadence (30c) n'est susceptible d'être influencée par le canal de

18

**0 014 415**

régulation de phase (B) seulement qu'à l'intérieur de limites déterminées.

5. Procédé selon la revendication 3 ou 4, caractérisé par le fait qu'un maître-onduleur ($W_i$) détermine la fréquence ($f_s$) de la tension de la barre omnibus ($U_S$), la tension de consigne de phase ($U_{\phi soll\,i}$) dudit maître-onduleur ($W_i$) étant une tension de fréquence constante alors que pour les autres onduleurs la tension de consigne de phase ($U_{\phi soll\,i}$) est la tension de la barre omnibus ($U_S$).

6. Procédé selon la revendication 3, caractérisé par le fait qu'un maître-onduleur ($W_i$) détermine la fréquence ($f_s$) de la barre omnibus, la position en fréquence et la position de phase du générateur de cadence (30c) du dispositif de commande (30) n'étant pas influencées dans le cas de ce maître-onduleur ($W_i$) alors que pour les autres onduleurs ($W_i$) la tension de consigne de phase ($U_{\phi soll}$) est la tension de la barre omnibus.

7. Procédé selon l'une des revendications 3 à 6, caractérisé par le fait qu'un maître-onduleur ($W_i$) détermine la valeur ($U_S$) de la tension de la barre-omnibus ($U_S$), alors que dans ce maître-onduleur ($W_i$) la tension de consigne de la valeur ($U_{Bsoll\,i}$) est une tension de valeur constante et que pour les autres onduleurs la tension de consigne de la valeur ($U_{Bsoll\,i}$) est la tension de la barre-omnibus ($U_S$).

8. Procédé selon l'une des revendications 5 à 7, caractérisé par le fait qu'à chaque onduleur ($W_i$) est associé un ordre hiérarchique, alors que parmi les onduleurs ($W_1$-$W_p$) qui sont reliés à la barre-omnibus (S) et qui sont en état de fonctionnement, l'onduleur ($W_i$) d'ordre hiérarchique le plus élevé est le maître-onduleur.

9. Procédé selon la revendication 3, dans lequel la barre omnibus est susceptible d'être reliée à un réseau, caractérisé par le fait qu'en présence d'une tension de réseau ($U_N$), on utilise pour le canal de régulation de phase (B) de tous les onduleurs ($W_i$) la tension de réseau ($U_N$) comme valeur de consigne de phase ($U_{\phi soll\,i}$).

10. Procédé selon l'une des revendications 1 à 4, dans lequel un réseau est relié à la barre-omnibus, caractérisé par le fait que dans chaque onduleur ($W_i$) la tension de consigne ($U_{soll\,i}$) est la tension de la barre-omnibus.

11. Procédé selon l'une des revendications 1 à 10, caractérisé par le fait que le courant de consigne ($I_{soll\,i}$) est déterminé, dans un circuit de calcul (A), selon l'équation suivante :

$$I_{soll\,i} = \frac{I_{ni}}{\sum\limits_{i}^{p} I_{ni}} \cdot I_S$$

étant noté que $I_S$ est le courant de charge de la barre-omnibus (S), $I_{ni}$ le courant nominal de l'onduleur ($W_i$) et p le nombre d'onduleurs ($W_i$) qui sont reliés à la barre-omnibus (S).

12. Procédé selon l'une des revendications 1 à 10, dans lequel un réseau est relié à la barre-omnibus, caractérisé par le fait que le courant de consigne ($I_{soll\,i}$) est calculé, dans un circuit de calcul (A) suivant l'équation :

$$I_{soll\,i} = \frac{I_{ni}}{\sum\limits_{1}^{p} I_{ni} + I_{nS}} \cdot I_S$$

dans laquelle $I_S$ est le courant de charge de la barre-omnibus (S), $I_{ni}$ le courant nominal de l'onduleur ($W_i$), p le nombre d'onduleurs ($W_i$) reliés à la barre-omnibus (S) et $I_{nS}$ étant une partie pour le courant de consigne du réseau.

13. Procédé selon l'une des revendications 1 à 12, avec une limitation de courant pour chaque onduleur, caractérisé par le fait que la valeur de la tension de consigne ($U_{soll\,i}$) de l'onduleur ($W_i$) est diminuée lorsque le courant de sortie ($I_{Wi}$) de cet onduleur ($W_i$) dépasse une valeur limite ($I_{max}$).

14. Procédé selon l'une des revendications 3 à 13, caractérisé par le fait que la tension de sortie ($U_{\alpha'}$) du canal de régulation de la valeur est limitée, du point de vue de sa plage des valeurs, par une valeur limite supérieure et une valeur limite inférieure ($U_{\alpha max}$, $U_{\alpha min}$).

15. Procédé selon la revendication 14, caractérisé par le fait que pour démarrer un onduleur ($W_i$) qui n'est pas relié à la barre-omnibus (S), la valeur-limite supérieure ($U_{\alpha max}$) est déplacée depuis zéro à une valeur nominale.

16. Montage pour la formation d'une grandeur de réglage de remplacement pour la mise en œuvre d'un procédé selon l'une des revendications 1 à 5, caractérisé par le fait qu'un détecteur de courant pour le courant ($I_S$) de la barre-omnibus est relié à l'entrée d'un circuit de multiplication (6) dont la sortie est reliée à l'entrée négative (9a) d'un étage additionneur (9), que l'entrée positive (9b) de l'étage de sommation (9) est reliée à un détecteur de courant pour le courant de sortie ($I_{Wi}$) de l'onduleur ($W_i$) et

19

qu'en aval de la sortie (9c) de l'étage de sommation (9) est monté un amplificateur (10) à facteur d'amplification $Z_x$, et dont la sortie est reliée à la première entrée positive (11b) de l'étage de sommation (11), la seconde entrée positive (11a) de l'étage de sommation (11) étant reliée à un détecteur de tension pour la tension de sortie ($U_{Wi}$) de l'onduleur.

17. Montage selon la revendication 16, caractérisé par le fait que le circuit de multiplication (6) comporte un amplificateur opérationnel (OP) dont l'entrée inverseuse (OPa) est reliée, par l'intermédiaire d'une résistance (R1), à l'entrée (6a) du circuit de calcul (6) dont l'entrée non inverseuse (OPb) est reliée à la masse, dont la sortie (OPc) est reliée à la sortie du circuit de multiplication (6) et qui comporte, entre la sortie (OPc) et l'entrée inverseuse (OPa), plusieurs circuits série dont chacun est constitué par une résistance de réaction (R2 à R5) et par un commutateur à semiconducteurs (F1 à F4), alors que les bases de chacun des commutateurs à semiconducteurs (F1 à F4) sont reliées à une entrée de signaux (6c à 6f) du circuit de multiplication (6).

18. Montage pour la régulation de phase, pour la mise en œuvre d'un procédé selon l'une des revendications 3 à 15, caractérisé par le fait que le canal de régulation de la phase (B) comporte un discriminateur de phase (4) dont les entrées (4a et 4b) sont reliées avec la sortie d'un circuit de calcul (A) pour la formation de la grandeur de réglage de remplacement ($U_{Wi}'$) ou avec le détecteur de tension pour la tension de consigne de phase ($U_{\phi soll}$), respectivement par l'intermédiaire de générateurs de signaux carrés (2, 3), réalisés sous la forme d'amplificateurs saturés, la sortie du discriminateur de phase (4c) étant reliée, par l'intermédiaire du régulateur de phase (5) à l'entrée de commande de la fréquence (30a) du dispositif de commande (30).

19. Montage pour la régulation de la valeur pour la mise en œuvre d'un procédé selon l'une des revendications 3 à 15, caractérisé par le fait qu'un canal de régulation de la valeur (C) comporte un étage de sommation (26) dont l'entrée positive (26a) est reliée à un détecteur de tension pour la valeur de consigne de la valeur ($U_{Bsoll\ i}$) et dont l'entrée négative (26b) est reliée à la sortie d'un circuit de calcul pour former la grandeur réglée de remplacement ($U_{Wi}'$), qu'en aval de l'étage de sommation est monté un régulateur de valeur (27) qui, par l'intermédiaire d'un dispositif de limitation (28), est relié à l'entrée de réglage de la valeur (30b) du dispositif de commande (30), le dispositif de limitation (28) comportant une première entrée de limitation (28c) recevant une valeur de tension fixe ($U_{\alpha min}$) pour la limitation de la valeur minimale, et une seconde entrée de limitation (28b) reliée à un générateur de mise en vitesse (29) réalisé sous la forme d'un générateur de fonction, pour limiter la valeur maximale, le générateur de mise en vitesse (29) étant susceptible d'être réglé à zéro par l'intermédiaire d'une entrée de commande (29a).

20. Montage pour la limitation du courant en vue de la mise en œuvre d'un procédé selon la revendication 13, caractérisé par le fait qu'un canal de limitation du courant (D) comporte un étage de sommation (23), dans lequel l'entrée négative (23a) de l'étage de sommation (23) étant reliée, par l'intermédiaire d'un redresseur (21) et d'un filtre de lissage (22), à un détecteur de courant pour le courant de sortie ($I_{Wi}$) de l'onduleur, et l'entrée positive (23b) de l'étage de sommation (23) étant reliée à une source de tension de consigne (20), alors que la sortie (23c) de l'étage de sommation (23) est reliée par l'intermédiaire d'un régulateur de limitation du courant (27) et d'une diode (25) à l'entrée négative (26d) d'un étage de sommation (26) à l'entrée positive (26a) est appliquée la tension de consigne ($U_{soll\ i}$).

0 014 415

FIG 1

FIG 2

1

FIG 3

FIG 4

FIG 5